# EUROPÄISCHE PATENTSCHRIFT

(11) **EP 3 384 236 B1**
(45) Veröffentlichungstag und Bekanntmachung des Hinweises auf die Patenterteilung: **01.01.2020**
(21) Anmeldenummer: 16798779.1
(22) Anmeldetag: 23.11.2016
(51) Int. Cl.: G01C 15/00, G01C 25/00

(54) **VERFAHREN ZUM ÜBERPRÜFEN UND/ODER KALIBRIEREN EINER VERTIKALACHSE EINES ROTATIONSLASERS**
METHOD FOR CONTROLLING AND/OR CALIBRATING A VERTICAL AXIS OF A ROTATION LASER
PROCÉDÉ DE CONTRÔLE ET/OU D'ÉTALONNAGE D'UN AXE VERTICAL D'UN LASER ROTATIF

(30) Priorität: 30.11.2015 EP 15197023
(43) Veröffentlichungstag der Anmeldung: 10.10.2018
(73) Patentinhaber: Hilti Aktiengesellschaft, 9494 Schaan (LI)
(72) Erfinder: LUKIC, Sasha, 9470 Buchs (CH); SANCHEN, Guenter, 9472 Grabs (CH)
(74) Vertreter: Hilti Aktiengesellschaft Corporate Intellectual Property
(86) Internationale Anmeldenummer: PCT/EP2016/078498
(87) Internationale Veröffentlichungsnummer: WO 2017/093091

(56) Entgegenhaltungen:
- EP-A1- 2 833 159
- DE-A1- 19 716 710
- Anonym: "Laser LAR-250", Stabila , 1. April 2008 (2008-04-01), Seiten FP-13, XP002757136, Gefunden im Internet: URL:http://www.stabila.de/cms/upload/downl oad/pdf/manual/de/lar250_manual_de.pdf [gefunden am 2016-04-29]

## Beschreibung

### Technisches Gebiet

Die vorliegende Erfindung betrifft ein Verfahren zum Überprüfen und/oder Kalibrieren einer Vertikalachse eines Rotationslasers gemäß dem Oberbegriff des Anspruchs 1.

### Stand der Technik

Rotationslaser werden im Innen- und Außenbereich für Nivellier- und Markierungsarbeiten eingesetzt, wie die Anzeige von horizontal, vertikal oder schräg verlaufenden Lasermarkierungen auf einer Zielfläche oder die Ermittlung und Überprüfung von waagerechten Höhenverläufen, senkrechten Linien, Fluchtlinien und Lotpunkten. Rotationslaser können in verschiedenen Gerätelagen, die als Horizontallage und Vertikallage ausgebildet sind, angeordnet werden. Dabei werden horizontal einsetzbare Rotationslaser, die ausschließlich in Horizontallage eingesetzt werden, und horizontal und vertikal einsetzbare Rotationslaser, die in Horizontallage und Vertikallage eingesetzt werden, unterschieden. Horizontal einsetzbare Rotationslaser weisen als Geräteachsen eine erste Horizontalachse und eine zweite Horizontalachse auf, die senkrecht zueinander verlaufen und eine Horizontalebene aufspannen. Horizontal und vertikal einsetzbare Rotationslaser weisen als Geräteachse neben der ersten und zweiten Horizontalachse eine Vertikalachse auf, die senkrecht zur Horizontalebene der ersten und zweiten Horizontalachse verläuft.

Um die Genauigkeit eines Rotationslasers im Betrieb zu gewährleisten, muss die Genauigkeit regelmäßig überprüft und bei Überschreiten einer Maximaldifferenz, die der Gerätehersteller definiert hat, eine Kalibrierung des Rotationslasers durchgeführt werden. Dabei wird die Genauigkeit des Rotationslasers für jede Geräteachse separat überprüft. Bekannt sind Verfahren zum Überprüfen und/oder Kalibrieren einer Horizontalachse und Verfahren zum Überprüfen und/oder Kalibrieren einer Vertikalachse. Bei horizontal einsetzbaren Rotationslasern werden nacheinander die erste und zweite Horizontalachse überprüft, wobei die Reihenfolge beliebig ist. Bei horizontal und vertikal einsetzbaren Rotationslasern erfolgt im Anschluss an die Überprüfung der ersten und zweiten Horizontalachse eine Überprüfung der Vertikalachse.

Die Ausrichtung der Geräteachsen in einen definierten Zustand erfolgt mittels einer Nivelliereinrichtung des Rotationslasers. Der definierte Zustand des Rotationslasers in Horizontallage wird als horizontaler Zustand und in Vertikallage als vertikaler Zustand bezeichnet. Die Nivelliereinrichtung umfasst eine erste Nivelliereinheit, die die erste Horizontalachse in einen ersten definierten Zustand ausrichtet, eine zweite Nivelliereinheit, die die zweite Horizontalachse in einen zweiten definierten Zustand ausrichtet, und bei einem vertikal einsetzbaren Rotationslaser eine dritte Nivelliereinheit, die die Vertikalachse in einen dritten definierten Zustand ausrichtet. Die Nivelliereinheiten umfassen jeweils einen Neigungssensor, der die Neigung der Geräteachse misst, und ein Verstellelement, mit dem die Neigung der Geräteachse verstellbar ist. Im Idealfall sind die Neigungssensoren parallel zu den zugeordneten Geräteachsen ausgerichtet. Ist ein Neigungssensor nicht parallel zur zugeordneten Geräteachse ausgerichtet, weist die Geräteachse einen Neigungsfehler auf.

Die Gerätehersteller von horizontal und vertikal einsetzbaren Rotationslasern definieren in den Bedienungsanleitungen ihrer Rotationslaser Verfahren zum Überprüfen der Vertikalachse, die vom Bediener regelmäßig durchzuführen sind, und Verfahren zum Kalibrieren der Vertikalachse, die vom Bediener durchzuführen sind, wenn die festgelegte Maximaldifferenz für die Vertikalachse überschritten wird. Die bekannten Verfahren zum Überprüfen und/oder Kalibrieren einer Vertikalachse werden in Vertikallage des Rotationslasers durchgeführt. Die Rotationslaser werden auf einem stabilen Untergrund oder einem Stativ in einer Messentfernung zu einer Messfläche aufgestellt. Jeder Gerätehersteller definiert die Messentfernung zwischen dem Rotationslaser und der Messfläche und legt eine Maximaldifferenz für die Vertikalachse fest.

Beim Rotationslaser LAR-250 von Stabila wird der Rotationslaser auf einem Stativ montiert und ist um eine Drehachse des Stativs verstellbar. Der Rotationslaser LAR-250 erzeugt einen um eine Rotationachse rotierenden ersten Laserstrahl und einen ruhenden zweiten Laserstrahl, der senkrecht zur Laserebene des rotierenden ersten Laserstrahls verläuft; die Vertikalachse wird mit Hilfe des ruhenden zweiten Laserstrahls überprüft. Die Überprüfung der Vertikalachse erfolgt zwischen einer ersten Messfläche und einer parallelen zweiten Messfläche, die einen Abstand von mindestens 10 m zueinander aufweisen. Der Rotationslaser LAR-250 wird in einer ersten Ortsposition unmittelbar vor der ersten Messfläche und in einer zweiten Ortsposition unmittelbar vor der zweiten Messfläche aufgestellt. In den Ortspositionen erfolgt eine Umschlagmessung, wobei der Rotationslaser LAR-250 manuell oder mit Hilfe einer automatischen Drehplattform in die Winkelpositionen ausgerichtet wird. Der Rotationslaser LAR-250 wird in der ersten Ortsposition in eine erste Winkelposition gedreht, in der die Vertikalachse auf die erste Messfläche ausgerichtet ist, und die Geräteachsen werden in den vertikalen Zustand ausgerichtet. Die Auftreffposition des zweiten Laserstrahls auf der ersten Messfläche wird als erster Kontrollpunkt markiert. Der Rotationslaser LAR-250 wird um 180° um die Drehachse des Stativs in eine zweite Winkelposition gedreht, in der die Vertikalachse in entgegen gerichteter Achsrichtung zur ersten Winkelposition auf die erste Messfläche ausgerichtet ist, und die Auftreffposition des zweiten Laserstrahls auf der zweiten Messfläche wird als zweiter Kontrollpunkt markiert. Der Rotationslaser LAR-250 wird entlang der Vertikalachse aus der ersten Ortsposition in die zweite Ortsposition positioniert und die Geräteachsen des Rotationslasers LAR-250 werden in den vertikalen Zustand ausgerichtet. Die Höhe des Rotationslasers LAR-250 wird mit Hilfe der Höheneinstelleinrichtung des Stativs verstellt, bis die Auftreffposition des zweiten Laserstrahls auf der zweiten Messfläche mit dem zweiten Kontrollpunkt zusammen fällt. Der Rotationslaser LAR-250 wird um 180° um die Drehachse des Stativs gedreht und die Auftreffposition des zweiten Laserstrahls auf der ersten Messfläche wird als dritter Kontrollpunkt markiert. Der Abstand zwischen dem ersten und dritten Kontrollpunkt wird als Differenz berechnet, die mit der von Stabila festgelegten Maximaldifferenz von 2 mm für die Vertikalachse verglichen wird. Wenn die Differenz grösser als die Maximaldifferenz ist, ist eine Kalibrierung der Vertikalachse erforderlich. Die Kalibrierung der Vertikalachse erfolgt mittels des ersten und dritten Kontrollpunktes. Der Rotationslaser LAR-250 wird mittels der Nivelliereinrichtung verstellt, bis der ruhende zweite Laserstrahl mittig zwischen dem ersten und dritten Kontrollpunkt angeordnet ist. Diese Position des ruhenden zweiten Laserstrahls wird als neuer Referenzwert bzw. neue Nulllage für den vertikalen Zustand der Vertikalachse gespeichert.

Beim Rotationslaser GRL 500 HV von Bosch Power Tools wird die Vertikalachse mit Hilfe einer Lotschnur überprüft und, falls erforderlich, kalibriert. Der Rotationslaser GRL 500 HV erzeugt einen rotierenden ersten Laserstrahl und einen ruhenden zweiten Laserstrahl, der senkrecht zur Laserebene des rotierenden ersten Laserstrahls verläuft; die Vertikalachse wird mit Hilfe des rotierenden ersten Laserstrahls überprüft. Bosch Power Tools hat für die Rotationslaser GRL 500 HV eine Messentfernung von 10 m zur Messfläche und eine Höhe der Messfläche von 10 m festgelegt. Der Bediener zeichnet mit Hilfe der Lotschnur eine senkrechte Vergleichslinie auf die Messfläche und vergleicht die vertikale Laserebene, die der rotierende erste Laserstrahl erzeugt, mit der senkrechten Vergleichslinie. Der Laserstrahl wird mittels der Nivelliereinrichtung des Rotationslasers so eingestellt, dass der rotierende erste Laserstrahl die Lotschnur am oberen Ende der Messfläche mittig trifft. Die Auftreffposition des rotierenden ersten Laserstrahls wird als Kontrollpunkt auf der Messfläche markiert und der Abstand zwischen dem Kontrollpunkt und der senkrechten Vergleichslinie als Differenz berechnet. Die Differenz wird mit der von Bosch Power Tools festgelegten Maximaldifferenz von 1 mm für die Vertikalachse verglichen. Wenn die Differenz grösser als die Maximaldifferenz ist, ist eine Kalibrierung der Vertikalachse erforderlich.

Die Kalibrierung der Vertikalachse erfolgt beim Rotationslaser GRL 500 HV in einem separaten Verfahren, das im Anschluss an das Verfahren zum Überprüfen der Vertikalachse durchgeführt wird. Bosch Power Tools hat für die Kalibrierung der Vertikalachse eine Messentfernung zwischen 5 m und 10 m zur Messfläche und eine Höhe der Messfläche von 10 m festgelegt. Der Bediener zeichnet mit Hilfe der Lotschnur eine senkrechte Vergleichslinie auf die Messfläche. Das Stativ wird so ausgerichtet, dass der rotierende erste Laserstrahl die senkrechte Vergleichslinie kreuzt. Der erste Laserstrahl wird mittels der Nivelliereinrichtung verstellt, bis die Laserebene, die der rotierende erste Laserstrahl aufspannt, so parallel als möglich zur senkrechten Vergleichslinie angeordnet ist. Wird keine Deckungsgleichheit zwischen dem rotierenden ersten Laserstrahl und der senkrechten Vergleichslinie erreicht, werden die Verfahrensschritte (Stativ ausrichten, Rotationslaser nivellieren und Laserstrahl mit Hilfe der Nivelliereinrichtung verstellen) wiederholt. Wenn Deckungsgleichheit zwischen dem rotierenden ersten Laserstrahl und der senkrechten Vergleichslinie erreicht wird, wird die Einstellung der Nivelliereinrichtung als neuer Referenzwert bzw. neue Nulllage für die Vertikalachse gespeichert. Nach der Kalibrierung ist eine weitere Schleife zum Überprüfen der Vertikalachse auf Neigungsfehler vorgesehen. Liegt die Differenz innerhalb der Maximaldifferenz, kann der Rotationslaser GRL 500 HV bei sachkundiger Bedienung mit der angegebenen Genauigkeit betrieben werden. Wenn die Differenz außerhalb der Maximaldifferenz liegt, muss der Rotationslaser GRL 500 HV beim Gerätehersteller justiert werden.

Beim Rotationslaser TRIAX UL-300 von Sokkia wird die Vertikalachse ebenfalls mit Hilfe einer Lotschnur überprüft und, falls erforderlich, kalibriert. Der Rotationslaser TRIAX UL-300 erzeugt einen rotierenden ersten Laserstrahl und einen ruhenden zweiten Laserstrahl, der senkrecht zur Laserebene des ersten Laserstrahls verläuft; die Vertikalachse wird mit Hilfe des rotierenden ersten Laserstrahls überprüft. Sokkia hat für die Rotationslaser TRIAX UL-300 eine Messentfernung von 6 m zur Messfläche und eine Höhe der Messfläche von mindestens 2.5 m festgelegt. Der Bediener zeichnet mit Hilfe der Lotschnur eine senkrechte Vergleichslinie auf die Messfläche und vergleicht die vertikale Laserebene, die der rotierende erste Laserstrahl auf der Messfläche erzeugt, mit der senkrechten Vergleichslinie. Wenn der erste Laserstrahl verzerrt ist, ist eine Kalibrierung der Vertikalachse erforderlich. Die Kalibrierung der Vertikalachse kann mit einem rotierenden Laserstrahl (erster Laserstrahl im Rotationsmodus) oder einem sich hin- und her bewegenden Laserstrahl (erster Laserstrahl im Linien-modus) durchgeführt werden. Der Laserstrahl wird mittels der Nivelliereinrichtung verstellt, bis die Markierung, die der Laserstrahl auf der Messfläche erzeugt, vertikal und deckungsgleich mit der senkrechten Vergleichslinie ist. Wenn Deckungsgleichheit zwischen dem Laserstrahl und der senkrechten Vergleichslinie erreicht wird, wird die Einstellung der Nivelliereinrichtung als neuer Referenzwert bzw. neue Nulllage für den vertikalen Zustand der Vertikalachse gespeichert.

Die bekannten Verfahren zum Überprüfen und/oder Kalibrieren einer Vertikalachse sind fehleranfällig und für eine Automatisierung ungeeignet. Das für den Rotationslaser LAR-250 von Stabila vorgesehene Verfahren zum Überprüfen und Kalibrieren der Vertikalachse ist abhängig von der Sorgfalt und der Genauigkeit, mit der der Bediener die Auftreffpositionen des Laserstrahls als Kontrollpunkte auf der Messfläche markiert. Nachteilig ist außerdem, dass der Bediener in zwei verschiedenen Ortspositionen Messungen durchführen muss und dazu den Rotationslaser LAR-250 verstellen muss. Die für den Rotationslaser GRL 500 HV von Bosch Power Tools vorgesehenen Verfahren zum Überprüfen und zum Kalibrieren einer Vertikalachse mit Hilfe einer Lotschnur haben den Nachteil einer ungewöhnlichen Messumgebung. Bosch Power Tools fordert für die Überprüfung und Kalibrierung der Vertikalachse eine Messfläche mit einer Höhe von 10 m. Bei vielen Messaufgaben im Innenbereich sind keine Messflächen vorhanden, die eine Höhe von 10 m aufweisen. Außerdem kann es für den Bediener sehr aufwändig sein, eine Lotschnur auf einer Höhe von 10 m zu befestigen. Das für den Rotationslaser TRIAX UL300 von Sokkia vorgesehene Verfahren zum Überprüfen und Kalibrieren einer Vertikalachse mit Hilfe einer Lotschnur ist abhängig von der Einschätzung des Bedieners, wann er die Markierung, die der rotierende erste Laserstrahl auf der Messfläche erzeugt, als verzerrt betrachtet und enthält kein quantitatives Kriterium, anhand dessen der Bediener entscheiden kann, ob eine Kalibrierung der Vertikalachse erforderlich ist.

### Darstellung der Erfindung

Die Aufgabe der vorliegenden Erfindung besteht in der Entwicklung eines Verfahrens zum Überprüfen und/oder Kalibrieren einer Vertikalachse eines Rotationslasers mit einer hohen Messgenauigkeit. Außerdem soll das Verfahren an die jeweiligen Umgebungsbedingungen der Messumgebung angepasst werden können und für eine automatisierte Ausführung geeignet sein.

Diese Aufgabe wird bei dem eingangs genannten Verfahren zum Überprüfen und/oder Kalibrieren einer Vertikalachse eines Rotationslasers erfindungsgemäß durch die Merkmale des unabhängigen Anspruchs 1 gelöst. Vorteilhafte Weiterbildungen sind in den abhängigen Ansprüchen angegeben.

Das Verfahren zum Überprüfen und/oder Kalibrieren einer Vertikalachse eines Rotationslasers mit einem Laserempfänger, wobei der Rotationslaser einen um eine Rotationsachse rotierbaren ersten Laserstrahl und einen parallel zur Rotationsachse verlaufenden ruhenden zweiten Laserstrahl aussendet und der Laserempfänger ein Detektionsfeld mit einer Längsrichtung, die der Messrichtung des Laserempfängers entspricht, und einer Querrichtung aufweist, weist erfindungsgemäß folgende Schritte auf:
▪ der Rotationslaser wird in einer Messentfernung Dv zum Laserempfänger positioniert, wobei der Rotationslaser in Vertikallage, in der die Vertikalachse senkrecht zur Lotrichtung verläuft, und der Laserempfänger in Queranordnung, in der die Querrichtung parallel zur Lotrichtung verläuft, ausgerichtet werden,
▪ die Geräteachsen des Rotationslasers, die als erste Horizontalachse, als zweite Horizontalachse und als Vertikalachse ausgebildet sind, werden in einen definierten Zustand ausgerichtet, wobei der definierte Zustand durch eine erste Nulllage für die erste Horizontalachse, eine zweite Nulllage für die zweite Horizontalachse und eine dritte Nulllage für die Vertikalachse festgelegt ist,
▪ der Rotationslaser wird in einer ersten Winkelposition angeordnet, wobei die Vertikalachse in der ersten Winkelposition auf das Detektionsfeld des Laserempfängers ausgerichtet wird,
▪ die Auftreffposition des zweiten Laserstrahls auf dem Detektionsfeld des Laserempfängers wird als erster Kontrollpunkt bestimmt und der Abstand des ersten Kontrollpunktes zu einer Nullposition des Detektionsfeldes als erster Höhenversatz gespeichert,
▪ der Rotationslaser wird in einer zweiten Winkelposition angeordnet, wobei die zweite Winkelposition zur ersten Winkelposition um 180° um die Rotationsachse des Rotationslasers gedreht ist,
▪ die Auftreffposition des zweiten Laserstrahls auf dem Detektionsfeld des Laserempfängers wird als zweiter Kontrollpunkt bestimmt und der Abstand des zweiten Kontrollpunktes zur Nullposition des Detektionsfeldes als zweiter Höhenversatz gespeichert,
▪ der Abstand zwischen dem ersten Kontrollpunkt und zweiten Kontrollpunkt wird als Differenz Δ aus dem ersten und zweiten Höhenversatz berechnet,
▪ die Messentfernung Dv zwischen dem Rotationslaser und dem Laserempfänger wird bestimmt und
▪ die Differenz Δ wird mit einer Maximaldifferenz Δₘₐₓ verglichen.

Beim erfindungsgemäßen Verfahren zum Überprüfen und/oder Kalibrieren einer Vertikalachse wird die Messentfernung zwischen dem Rotationslaser und dem Laserempfänger gemessen und ist nicht auf eine vorgegebene Messentfernung festgelegt. Dies hat den Vorteil, dass die Messentfernung an die Umgebungsbedingungen der Messumgebung angepasst werden kann. Der Verfahrensschritt, in dem die Messentfernung zwischen dem Rotationslaser und dem Laserempfänger bestimmt wird, kann an unterschiedlichen Stellen im erfindungsgemäßen Verfahren ausgeführt werden. Die Auftreffpositionen des Laserstrahls werden beim erfindungsgemäßen Verfahren mit einem Laserempfänger bestimmt und als Höhenversatz zur Nullposition des Detektionsfeldes gespeichert. Durch die Verwendung eines Laserempfängers mit Messfunktion wird die Messgenauigkeit bei der Ausführung des Verfahrens erhöht. Der Laserempfänger bestimmt die Auftreffposition des Laserstrahls auf dem Detektionsfeld nach einer festen Routine. Dies hat den Vorteil, dass die Genauigkeit des Verfahrens unabhängig von der Sorgfalt des Bedieners ist und sich für eine automatisierte Ausführung des Verfahrens eignet. Wenn der Rotationslaser auf einer motorisierten Drehplattform angeordnet wird, kann das erfindungsgemäße Verfahren vollautomatisch ausgeführt werden. Bei einer halbautomatischen Ausführung führt der Bediener die Anordnung des Rotationslasers in die erste und zweite Winkelposition auf Anforderung manuell durch, alle anderen Verfahrensschritte werden vom Rotationslaser und Laserempfänger ausgeführt.

Bevorzugt wird die Messentfernung zwischen dem Rotationslaser und dem Laserempfänger mittels des zweiten Laserstrahls und des Laserempfängers bestimmt. Das erfindungsgemäße Verfahren hat den Vorteil, dass die Umgebungsbedingungen der Messumgebung beim Überprüfen und/oder Kalibrieren der Vertikalachse berücksichtigt werden können und außerdem keine zusätzlichen Gerätekomponenten erforderlich sind. Die Messentfernung zwischen dem Rotationslaser und dem Laserempfänger wird so gewählt, wie es die Messumgebung zulässt.

Besonders bevorzugt wird die Messentfernung zwischen dem Rotationslaser und dem Laserempfänger als erste Distanz mittels eines ersten Messverfahrens, als zweite Distanz mittels eines zweiten Messverfahrens oder als gemittelte Distanz aus der ersten und zweiten Distanz bestimmt. Wenn die Messentfernung zwischen dem Rotationslaser und dem Laserempfänger mittels verschiedener Messverfahren bestimmt werden kann, kann das Verfahren zum Überprüfen und/oder Kalibrieren einer Vertikalachse an die Umgebungsbedingungen der Messumgebung und die Funktionen der Messgeräte (Rotationslaser und Laserempfänger) angepasst werden.

In einer ersten bevorzugten Ausführung wird die Messentfernung zwischen dem Rotationslaser und dem Laserempfänger als erste Distanz mittels des ersten Messverfahrens bestimmt. Beim ersten Messverfahren wird der Laserstrahl um einen Neigungswinkel geneigt und der Abstand des geneigten Laserstrahls zur Nullposition des Detektionsfeldes wird gespeichert. Das erste Messverfahren ist für Laserempfänger mit einer Messfunktion geeignet, die den Abstand eines Laserstrahls zu einer Nullposition als Höhenversatz messen können. Die Messung der ersten Distanz kann beim erfindungsgemäßen Verfahren in der ersten Winkelposition oder der zweiten Winkelposition erfolgen. Die Neigung des Laserstrahls um den Neigungswinkel kann mittels der Nivelliereinrichtung des Rotationslasers durchgeführt werden. Die Nivelliereinrichtung umfasst eine erste Nivelliereinheit, die die erste Horizontalachse in einen ersten definierten Zustand ausrichtet, eine zweite Nivelliereinheit, die die zweite Horizontalachse in einen zweiten definierten Zustand ausrichtet, und eine dritte Nivelliereinheit, die die Vertikalachse in einen dritten definierten Zustand ausrichtet.

Der Rotationslaser kann in einer beliebigen ersten Winkelposition angeordnet werden; es muss lediglich sichergestellt sein, dass die Vertikalachse auf das Detektionsfeld des Laserempfängers ausgerichtet ist. Wenn die Messentfernung zwischen dem Rotationslaser und dem Laserempfänger als erste Distanz mittels des ersten Messverfahrens bestimmt wird, muss die Neigung des Laserstrahls vom Detektionsfeld als Höhenversatz gemessen werden können. Daher ist es vorteilhaft, wenn die erste oder zweite Horizontalachse des Rotationslasers parallel zu einer Längsrichtung des Detektionsfeldes ausgerichtet wird. Wenn die erste Horizontalachse parallel zur Längsrichtung des Detektionsfeldes ausgerichtet ist, wird der Laserstrahl mittels der ersten Nivelliereinheit um die zweite Horizontalachse geneigt, wobei die Einstellung des Neigungswinkels mit Hilfe eines ersten Verstellelementes und eines ersten Neigungssensors der ersten Nivelliereinheit erfolgt. Wenn die zweite Horizontalachse parallel zur Längsrichtung des Detektionsfeldes ausgerichtet ist, wird der Laserstrahl mittels der zweiten Nivelliereinheit um die erste Horizontalachse geneigt, wobei die Einstellung des Neigungswinkels mit Hilfe eines zweiten Verstellelementes und eines zweiten Neigungssensors der zweiten Nivelliereinheit erfolgt.

In einer ersten Variante des ersten Messverfahrens wird der Rotationslaser vertikal ausgerichtet, der vertikal ausgerichtete Laserstrahl wird auf die Nullposition des Detektionsfeldes eingestellt, der Laserstrahl wird in Richtung des Laserempfängers um einen Neigungswinkel α geneigt, die Auftreffposition des geneigten Laserstrahls auf dem Detektionsfeld des Laserempfängers wird als erster Messpunkt bestimmt, der Abstand des ersten Messpunktes zur Nullposition des Detektionsfeldes wird als erste Höhe h₁ = h(α) gespeichert und die erste Distanz d₁ wird aus dem Neigungswinkel α und einer Höhendifferenz Δh zwischen der ersten Höhe h₁ und der Nullposition des Detektionsfeldes berechnet. Wenn die Querrichtung des Laserempfängers parallel zur Lotrichtung ausgerichtet ist, kann die erste Distanz d₁ gemäß der Formel tan(a) = Δh/d₁ berechnet werden. Für kleine Neigungswinkel α gilt näherungsweise tan(α) ≈ sin(α). Die erste Variante des ersten Messverfahrens ist besonders für Rotationslaser und Laserempfänger mit Auto-Alignment-Funktion geeignet, bei denen die Höheneinstellung des Laserstrahls auf die Nullposition des Detektionsfeldes des Laserempfängers automatisch durchgeführt werden kann.

In einer zweiten Variante des ersten Messverfahrens wird der Rotationslaser vertikal ausgerichtet, die Auftreffposition des vertikal ausgerichteten Laserstrahls auf dem Detektionsfeld des Laserempfängers wird als Referenzpunkt bestimmt, der Abstand des Referenzpunktes zur Nullposition des Detektionsfeldes wird als Referenzhöhe h₀ = h(0°) gespeichert, der Laserstrahl wird um einen Neigungswinkel α geneigt, die Auftreffposition des geneigten Laserstrahls auf dem Detektionsfeld wird als erster Messpunkt bestimmt, der Abstand des ersten Messpunktes zur Nullposition des Detektionsfeldes wird als erste Höhe h₁ = h(α) gespeichert und die erste Distanz d₁ wird aus dem Neigungswinkel α und einer Höhendifferenz Δh zwischen der ersten Höhe und der Referenzhöhe berechnet. Wenn die Querrichtung des Laserempfängers parallel zur Lotrichtung ausgerichtet ist, kann die erste Distanz d₁ gemäß der Formel tan(α) = (h₁ - h₀)/d₁ = Δh/d₁ berechnet werden. Für kleine Neigungswinkel α gilt näherungsweise tan(α) ≈ sin(α). Die zweite Variante des ersten Messverfahrens ist für Rotationslaser und Laserempfänger ohne Auto-Alignment-Funktion geeignet. Der Bediener muss lediglich sicherstellen, dass der um den Neigungswinkel α geneigte Laserstrahl vom Detektionsfeld des Laserempfängers erfasst wird. Bei einem Rotationslaser und Laserempfänger mit Auto-Alignment-Funktion wird der Laserstrahl automatisiert in den Bereich des Detektionsfeldes verfahren.

In einer dritten Variante des ersten Messverfahrens wird der Rotationslaser vertikal ausgerichtet, der vertikal ausgerichtete Laserstrahl wird in einer Neigungsrichtung um einen Neigungswinkel α geneigt, die Auftreffposition des geneigten Laserstrahls auf dem Detektionsfeld des Laserempfängers wird als erster Messpunkt bestimmt, der Abstand des ersten Messpunktes zur Nullposition des Detektionsfeldes wird als erste Höhe h₁ = h(α) gespeichert, der Laserstrahl wird in einer entgegen gerichteten Neigungsrichtung um einen negativen Neigungswinkel -α geneigt, die Auftreffposition des geneigten Laserstrahls auf dem Detektionsfeld wird als zweiter Messpunkt bestimmt, der Abstand des zweiten Messpunktes zur Nullposition des Detektionsfeldes wird als zweite Höhe h₂ = h(-α) gespeichert und die erste Distanz (d₁) wird aus dem Neigungswinkel α und einer Höhendifferenz Δh zwischen der ersten Höhe und zweiten Höhe berechnet. Wenn die Querrichtung des Laserempfängers parallel zur Lotrichtung ausgerichtet ist, kann die erste Distanz d₁ gemäß der Formel tan(2a) = (h(α) - h(-α))/d₁ = Δh/d₁ berechnet werden. Für kleine Neigungswinkel α gilt näherungsweise tan(2α) ≈ sin(2α). Die dritte Variante des ersten Messverfahrens ist für Rotationslaser und Laserempfänger mit und ohne Auto-Alignment-Funktion geeignet. Wenn der Laserstrahl zunächst auf die Nullposition des Detektionsfeldes oder zumindest in die Nähe der Nullposition ausgerichtet wird, kann die gesamte Detektionshöhe des Detektionsfeldes genutzt werden. Bei einem Gerätesystem mit Auto-Alignment-Funktion kann die Einstellung auf die Nullposition automatisiert durchgeführt werden.

In einer zweiten bevorzugten Ausführung wird die Messentfernung zwischen dem Rotationslaser und dem Laserempfänger als zweite Distanz mittels des zweiten Messverfahrens bestimmt. Beim zweiten Messverfahren wird der Rotationslaser vertikal ausgerichtet, der Laserstrahl wird mit einer bekannten Geschwindigkeit v_{R} bewegt, die Signallänge tₛ des Laserstrahls auf dem Detektionsfeld des Laserempfängers wird bestimmt und die zweite Distanz d₂ wird aus der Geschwindigkeit v_{R}, der Signallänge tₛ und der Detektionsbreite B_{D} des Detektionsfeldes berechnet. Wenn die Querrichtung des Laserempfängers parallel zur Lotrichtung ausgerichtet ist, kann die zweite Distanz d₂ gemäß der Formel tₛ / t_{full} = B_{D} / (2πd₂) mit t_{full} = 60/v_{R} berechnet werden. Die Geschwindigkeit v_{R} wird in Umdrehungen pro Minute angegeben und die für eine Umdrehung erforderliche Zeit t_{full} beträgt 60/v_{R}. Das zweite Messverfahren ist für Rotationslaser und Laserempfänger ohne Auto-Alignment-Funktion geeignet. Der Laserempfänger muss die Signallänge tₛ des Laserstrahls auf dem Detektionsfeld messen können.

In einer dritten bevorzugten Ausführung wird die Messentfernung zwischen dem Rotationslaser und dem Laserempfänger als gemittelte Distanz aus der ersten und zweiten Distanz bestimmt. Durch die Mittelung aus der ersten und zweiten Distanz kann die Genauigkeit, mit der die Messentfernung zwischen dem Rotationslaser und dem Laserempfänger bestimmt werden kann, erhöht werden. Die erste Distanz, die mittels des ersten Messverfahrens bestimmt wird, ist grösser oder gleich der tatsächlichen Messentfernung. Wenn die Querrichtung des Laserempfängers nicht parallel zur Lotrichtung ausgerichtet ist, sondern gegenüber der Lotrichtung geneigt ist, ist der horizontale Abstand senkrecht zur Lotrichtung kleiner als der Abstand, den das Detektionsfeld des Laserempfängers gemessen hat. Die zweite Distanz, die mittels des zweiten Messverfahrens bestimmt wird, ist kleiner oder gleich der tatsächlichen Messentfernung. Wenn die Querrichtung des Laserempfängers nicht parallel zur Lotrichtung ausgerichtet ist, sondern gegenüber der Lotrichtung geneigt ist, ist der vertikale Abstand in Lotrichtung, den der Laserstrahl auf dem Detektionsfeld überstreift, grösser als die Detektionsbreite B_{D} des Detektionsfeldes.

In einer bevorzugten Weiterentwicklung des Verfahrens wird eine Neigung des Laserempfängers relativ zu einer Lotrichtung als erster Vertikalwinkel φ₁ in einer ersten Vertikalebene und/oder als zweiter Vertikalwinkel φ₂ in einer zweiten Vertikalebene ermittelt, wobei die erste Vertikalebene von der Lotrichtung und einem Normalenvektor des Detektionsfeldes des Laserempfängers und die zweite Vertikalebene von einer Längsrichtung und einer Querrichtung des Detektionsfeldes aufgespannt wird. Der erste Vertikalwinkel φ₁ wird zwischen dem Normalenvektor des Detektionsfeldes und der Lotrichtung gemessen, wobei der erste Vertikalwinkel φ₁ die Abweichung von 90° zwischen dem Normalenvektor und der Lotrichtung darstellt, und der zweite Vertikalwinkel φ₂ wird zwischen der Lotrichtung und der Längsrichtung des Detektionsfeldes gemessen. Bei der Ausführung des erfindungsgemäßen Verfahrens ist der Laserempfänger in Queranordnung ausgerichtet, wobei die Längsrichtung des Detektionsfeldes senkrecht zur Lotrichtung und die Querrichtung des Detektionsfeldes parallel zur Lotrichtung verlaufen sollten. Durch eine Neigung des Laserempfängers relativ zur Lotrichtung weichen die horizontalen und vertikalen Abstände von den Abständen, die das Detektionsfeld des Laserempfängers gemessen hat, ab. Wenn die Neigung des Laserempfängers bekannt ist, können die Größen entsprechend korrigiert werden. Der Laserempfänger kann relativ zur Lotrichtung um den ersten und/oder zweiten Vertikalwinkel geneigt sein. Die Neigung des Laserempfängers kann mittels eines 2-Achsen-Beschleunigungssensors oder mittels zwei 1-Achs-Beschleunigungssensoren gemessen werden.

Besonders bevorzugt wird bei der Auswertung mit dem Laserempfänger für den ersten Vertikalwinkel φ₁ und/oder den zweiten Vertikalwinkel φ₂ ein winkelabhängiger Korrekturfaktor cos(90°- φ₁), cos(90°- φ₂), 1/cos(90°- φ₂) multipliziert. Durch die Multiplikation mit einem winkelabhängigen Korrekturfaktor oder mit mehreren winkelabhängigen Korrekturfaktoren kann die Neigung des Laserempfängers um den ersten Vertikalwinkel φ₁ und/oder den zweiten Vertikalwinkel φ₂ kompensiert werden. In den Formeln, die die Messfunktion des Laserempfängers nutzen und Abstände auf dem Detektionsfeld in Längsrichtung messen, werden die Abstände mit einem Korrekturfaktor cos(90°-φ₁) = sin(φ₁) für den ersten Vertikalwinkel φ₁ und einem Korrekturfaktor cos(90°-φ₂) = sin(φ₂) für den zweiten Vertikalwinkel φ₂ multipliziert. Der Korrekturfaktor cos(90°-φ₁) · cos(90°- φ₂) = sin(φ₁) · sin(φ₂) ist bei der Distanzmessung der Messentfernung mittels des ersten Messverfahrens, bei der Bestimmung der Differenz zwischen dem ersten und zweiten Kontrollpunkt und der Berechnung des Korrekturwinkels im Rahmen des erfindungsgemäßen Verfahrens zu berücksichtigen. Bei der Distanzmessung der Messentfernung D_{V} als zweite Distanz mittels des zweiten Messverfahrens wird nicht die übliche Messfunktion des Laserempfängers in Längsrichtung genutzt, sondern die Detektionsbreite in Querrichtung. Durch die Neigung des Laserempfängers in der zweiten Vertikalebene um den zweiten Vertikalwinkel φ₂ ist der vertikale Abstand, den der Laserstrahl auf dem Detektionsfeld überstreift, grösser als die Detektionsbreite B_{D} des Detektionsfeldes. Die Signallänge des Laserstrahls entspricht dem vertikalen Abstand auf dem Detektionsfeld. Für den vertikalen Abstand gilt der Zusammenhang B_{D}/cos(90° - φ₂) = B_{D}/ sin(φ₂). Eine Neigung des Laserempfängers um den ersten Vertikalwinkel φ₁ verändert den vertikalen Abstand nicht. Der winkelabhängige Korrekturfaktor 1/cos(90°- φ₂) = 1/sin(φ₂) wird bei der der Distanzmessung mittels des zweiten Messverfahrens berücksichtigt.

In einer bevorzugten Weiterentwicklung des Verfahrens werden für die Ausrichtung der Vertikalachse in den definierten Zustand mehrere Nulllagen in Abhängigkeit von einer Temperatur oder einer von der Temperatur abhängigen Messgröße aufgenommen und in einer Kennlinie gespeichert. Dabei umfasst der Begriff "Kennlinie" sowohl eine kontinuierliche Kennlinie als auch eine Tabelle mit diskreten Wertepaaren von Nulllage und Temperatur oder von Nulllage und temperaturabhängiger Messgröße. Die gespeicherte Kennlinie stellt für die Vertikalachse des Rotationslasers einen Zusammenhang zwischen der Temperatur bzw. der temperaturabhängigen Messgröße und der Nulllage des Neigungssensors dar. Als Nulllage ist der Neigungswinkel definiert, der dem definierten Zustand der Vertikalachse entspricht. Aus der Kennlinie kann für jede Temperatur aus dem zugelassenen Betriebstemperaturbereich eine Nulllage abgelesen werden.

Bevorzugt wird die Temperatur oder die von der Temperatur abhängige Messgröße des Rotationslasers gemessen, die zur Temperatur oder Messgröße zugehörige Nulllage wird aus der Kennlinie ermittelt und die Vertikalachse wird in den durch die Nulllage definierten Zustand ausgerichtet. Durch die Temperaturmessung kann die Gerätegenauigkeit des Rotationslasers erhöht werden, da der Einfluss der Temperatur auf die Gerätegenauigkeit des Rotationslasers reduziert wird.

Besonders bevorzugt wird die Temperatur des Rotationslasers mittels eines Neigungssensors, der ein Gehäuse, das mit einer Flüssigkeit und einer Gasblase gefüllt ist, eine Lichtquelle und mindestens einen Fotodetektor umfasst, gemessen. Die Messung der Temperatur des Rotationslasers mittels des Neigungssensors der Nivelliereinheit hat den Vorteil, dass die Temperatur genau an dem Ort im Gerätegehäuse des Rotationslasers gemessen wird, der für die Ausrichtung der Vertikalachse relevant ist. Außerdem ist kein weiteres Sensorelement für die Temperaturmessung erforderlich, so dass der apparative Aufwand für die Temperaturmessung reduziert ist.

Besonders bevorzugt wird eine weitere Kennlinie von Temperaturen und Blasenlängen der Gasblase gespeichert, die Blasenlänge der Gasblase wird mittels der Lichtquelle und des Fotodetektors des Neigungssensors gemessen und die zur gemessenen Blasenlänge zugehörige Temperatur wird anhand der weiteren Kennlinie ermittelt. Die Gasblase des Neigungssensors weist eine Blasenlänge auf, die temperaturabhängig ist und sich daher als Messgröße für die Temperatur eignet. Die Blasenlänge kann mit Hilfe der Lichtquelle und des Fotodetektors des Neigungssensors gemessen werden. Für die Temperaturmessung ist kein weiteres Sensorelement erforderlich, die Temperaturmessung erfolgt ausschließlich mit Hilfe der Komponenten des Neigungssensors.

Bevorzugt wird aus der Messentfernung D_{V}, dem ersten Höhenversatz H₁ und dem zweiten Höhenversatz H₂ ein Korrekturwinkel θ berechnet und der Korrekturwinkel θ wird als neue Nulllage für die Ausrichtung der Vertikalachse in den definierten vertikalen Zustand gespeichert, wenn die Differenz Δ grösser als die Maximaldifferenz Δₘₐₓ ist. Die Messentfernung zwischen dem Rotationslaser und dem Laserempfänger wurde als erste Distanz, als zweite Distanz oder als gemittelte Distanz bestimmt und wird für die Kalibrierung der Vertikalachse benötigt. Wenn die Differenz Δ zwischen dem ersten und zweiten Kontrollpunkt grösser als die vom Gerätehersteller definierte Maximaldifferenz Δₘₐₓ ist, erfüllt der Rotationslaser die angegebene Gerätegenauigkeit nicht und die Vertikalachse muss kalibriert werden. Der Korrekturwinkel θ kann gemäß der Formel tan(θ) = (H₁ - H₂)/2D_{V} berechnet werden.

Besonders bevorzugt wird die kalibrierte Vertikalachse in einer weiteren Prüfschleife überprüft, wobei der vertikale Zustand der Vertikalachse durch die neue Nulllage definiert ist. Die Geräteachsen des Rotationslasers (erste und zweite Horizontalachse und Vertikalachse) werden mittels der Nivelliereinrichtung in ihren jeweiligen definierten Zustand ausgerichtet und das Verfahren zum Überprüfen der Vertikalachse wird durchgeführt. Der Abstand zwischen dem ersten Kontrollpunkt, der in der ersten Winkelposition bestimmt wird, und dem zweiten Kontrollpunkt, der in der zweiten Winkelposition bestimmt wird, wird als Differenz Δ berechnet und mit der Maximaldifferenz Δₘₐₓ verglichen. Wenn die Differenz Δ kleiner als die Maximaldifferenz Δₘₐₓ ist, erfüllt der Rotationslaser die angegebene Gerätegenauigkeit. Für den Fall, dass die Differenz Δ grösser als die Maximaldifferenz Δₘₐₓ ist oder gleich der Maximaldifferenz Δₘₐₓ ist, ist eine Justierung des Rotationslasers erforderlich.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine Vorrichtung mit einem Rotationslaser in Vertikallage und einem Laserempfänger in Queranordnung;
- FIGN. 2A-C: den Rotationslaser der FIG. 1 in Vertikallage in einer dreidimensionalen Darstellung (FIG. 2A) und die wesentlichen Komponenten des Rotationslasers in einer schematischen Darstellung in einer ersten Ebene (FIG. 2B) und einer zweiten Ebene (FIG. 2C);
- FIGN. 3A, B: den Laserempfänger der FIG. 1 in einer dreidimensionalen Darstellung (FIG. 3A) und die wesentlichen Komponenten des Laserempfängers und des Rotationslasers in einer schematischen Darstellung (FIG. 3B);
- FIGN. 4A-C: den Rotationslaser und den Laserempfänger der FIG. 1 bei der Ausführung des erfindungsgemäßen Verfahrens zum Überprüfen und Kalibrieren einer Vertikalachse des Rotationslasers;
- FIGN. 5A-C: drei Varianten eines ersten Messverfahrens zum Messen einer ersten Distanz zwischen dem Rotationslaser und dem Laserempfänger mittels eines geneigten Laserstrahls;
- FIGN. 6A, B: den Laserempfänger, der zu einer Lotrichtung um einen ersten Vertikalwinkel (FIG. 6A) und einen zweiten Vertikalwinkel (FIG. 6B) geneigt ist, in einer schematischen Darstellung; und
- FIGN. 7A-C: den Aufbau eines optischen Neigungssensors mit einer Gasblase (FIG. 7A), eine Kennlinie, die eine Nulllage des Neigungssensors abhängig von einer Temperatur darstellt (FIG. 7B), und eine weitere Kennlinie, die die Temperatur abhängig von einer Blasenlänge der Gasblase darstellt (FIG. 7C).

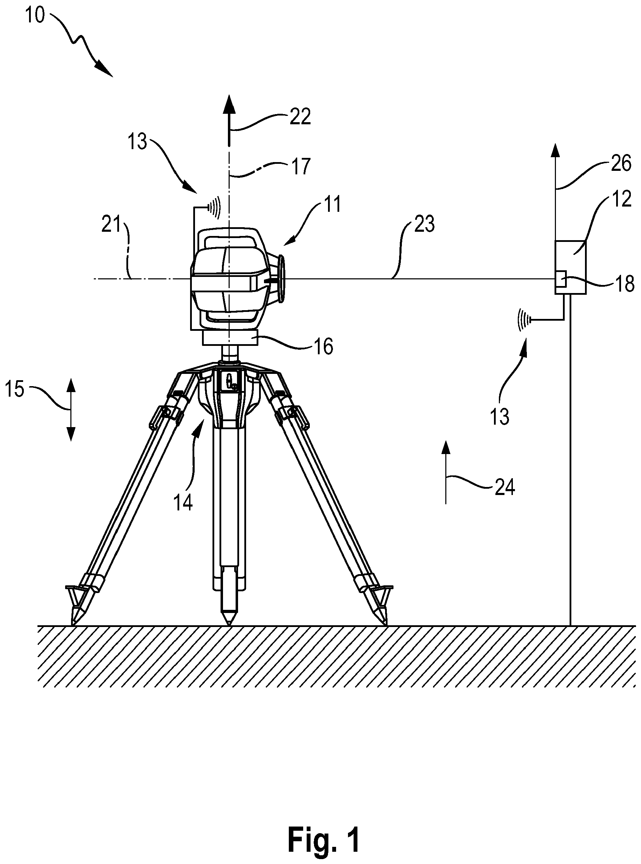

**FIG. 1** zeigt eine Vorrichtung **10** mit einem Rotationslaser **11** und einem Laserempfänger **12,** die über eine drahtlose Kommunikationsverbindung **13** verbindbar sind. Der Rotationslaser 11 ist in Vertikallage ausgerichtet, die für vertikale Anwendungen des Rotationslasers vorgesehen ist. Der Rotationslaser 11 ist mittels eines Vertikaladapters auf einem motorisierten Stativ **14** angeordnet, das eine automatische Höheneinstellung des Rotationslasers 11 in einer Höhenrichtung **15** ermöglicht. Zusätzlich kann eine Drehplattform **16** vorgesehen sein, die eine automatische Winkeleinstellung des Rotationslasers 11 um eine Drehachse **17** der Drehplattform 16 ermöglicht. Die Drehplattform 16 kann in das Stativ 14 integriert sein oder als separate Komponente, die auf dem Stativ 14 angeordnet wird, ausgebildet sein. Der Laserempfänger 12 ist mit einer Messfunktion ausgestattet, die eine Auftreffposition eines Laserstrahls auf ein Detektionsfeld **18** des Laserempfängers 12 ermittelt und den Abstand des Laserstrahls zu einer Nullposition **19** des Detektionsfeldes 18 darstellt.

Der Rotationslaser 11 ist als horizontal und vertikal einsetzbarer Rotationslaser ausgebildet, der einen um eine Rotationsachse **21** des Rotationslasers 11 rotierenden ersten Laserstrahl **22** und einen ruhenden zweiten Laserstrahl **23** aufweist. Der rotierende erste Laserstrahl 22 erzeugt eine Laserebene, die senkrecht zur Rotationsachse 21 angeordnet ist, und der zweite Laserstrahl 23 verläuft senkrecht zur Laserebene des ersten Laserstrahls 22. Bei der in FIG. 1 dargestellten Vertikallage des Rotationslasers 11 wird der zweite Laserstrahl 23 verwendet und auf das Detektionsfeld 18 des Laserempfängers 12 ausgerichtet, wobei der Laserempfänger 12 in einer Queranordnung ausgerichtet ist.

Die Ausrichtung des Laserempfängers 12 ist mittels des Detektionsfeldes 18 und einer Lotrichtung **24** definiert. Das Detektionsfeld 18 des Laserempfängers 12, mit dem die Auftreffposition des ersten oder zweiten Laserstrahls 22, 23 erfasst wird, weist in einer Längsrichtung **25** eine Detektionshöhe **H_{D}** und in einer Querrichtung **26** eine Detektionsbreite **B_{D}** auf. Die Längsrichtung 25 entspricht der Messrichtung des Laserempfängers 12 und die Querrichtung 26 ist senkrecht zur Längsrichtung 25 ausgerichtet, wobei die Längs- und Querrichtung 25, 26 parallel zu einer Oberseite des Detektionsfeldes 18 verlaufen. Als Längsanordnung wird die Ausrichtung des Laserempfängers 12 bezeichnet, in der die Längsrichtung 25 des Detektionsfeldes 18 parallel zur Lotrichtung 24 ausgerichtet ist, und als Queranordnung die Ausrichtung des Laserempfängers 12, in der die Querrichtung 26 des Detektionsfeldes 18 parallel zur Lotrichtung 24 ausgerichtet ist.

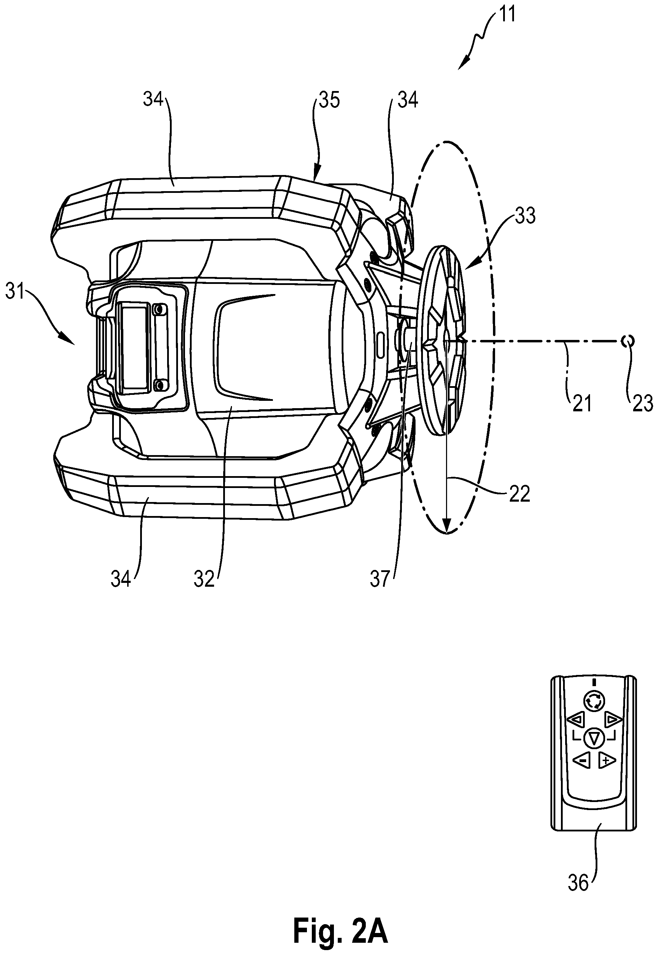

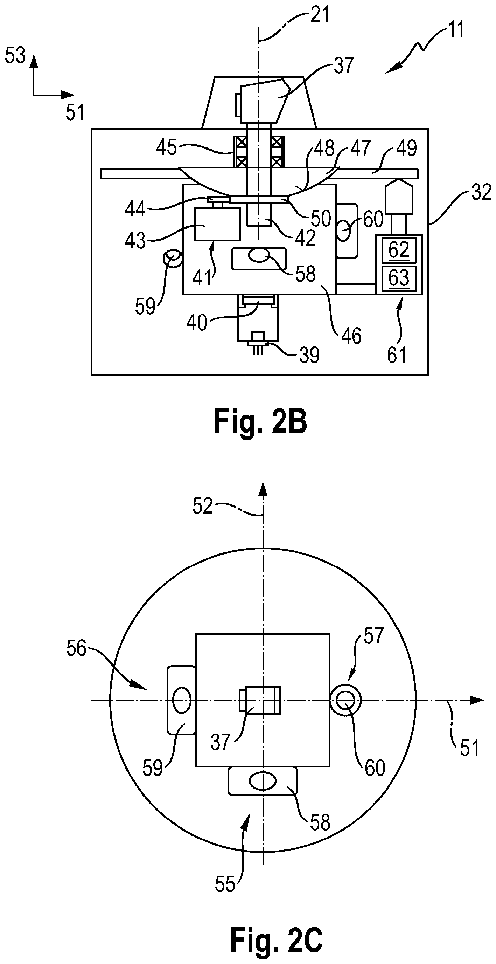

**FIGN. 2A-C** zeigen den Rotationslaser 11 in einer dreidimensionalen Darstellung in Vertikallage (FIG. 2A) und die wesentlichen Komponenten des Rotationslasers 11 in einer schematischen Darstellung, wobei FIG. 2B die Komponenten in einer Vertikalebene parallel zur Rotationsachse 21 und FIG. 2C die Komponenten in einer Horizontalebene senkrecht zur Rotationsachse 21 darstellt.

Der Rotationslaser 11 umfasst ein Gerätegehäuse **31** und eine im Gerätegehäuse 31 angeordnete Messeinrichtung. Das Gerätegehäuse 31 besteht aus einem Grundgehäuse **32,** einem Rotationskopf **33** und mehreren Handgriffen **34.** Die Bedienung des Rotationslasers 11 erfolgt über eine Bedienungseinrichtung **35,** die in das Grundgehäuse 32 integriert ist und von außen bedienbar ist. Neben der in das Grundgehäuse 32 integrierten Bedienungseinrichtung 35 kann eine Fernbedienung **36** vorgesehen sein, die über eine Kommunikationsverbindung mit dem Rotationslaser 11 verbindbar ist. Die Messeinrichtung des Rotationslasers 11 erzeugt im Inneren des Grundgehäuses 32 einen Laserstrahl, der auf eine um die Rotationsachse 21 rotierende Umlenkoptik **37** trifft. Ein erster Teil des Laserstrahls wird von der Umlenkoptik 37 um 90° umgelenkt und bildet den ersten Laserstrahl 22 des Rotationslasers 11. Ein zweiter Teil des Laserstrahls tritt durch die Umlenkoptik 37 hindurch und bildet den zweiten Laserstrahl 23 des Rotationslasers 11. Abhängig von der Rotationsgeschwindigkeit, mit der der erste Laserstrahl 22 um die Rotationsachse 21 rotiert wird, werden ein Rotationsmodus, ein Linienmodus und ein Punktmodus des Rotationslasers 11 unterschieden.

**FIGN. 2A-C** zeigen den Rotationslaser 11 in einer dreidimensionalen Darstellung (FIG. 2A) und die wesentlichen Komponenten des Rotationslasers 11 in einer schematischen Darstellung, wobei FIG. 2B die Komponenten in einer Vertikalebene parallel zur Rotationsachse 21 und FIG. 2C die Komponenten in einer Horizontalebene senkrecht zur Rotationsachse 21 darstellt.

Der Rotationslaser 11 umfasst ein Gerätegehäuse **31** und eine im Gerätegehäuse 31 angeordnete Messeinrichtung. Das Gerätegehäuse 31 besteht aus einem Grundgehäuse **32,** einem Rotationskopf **33** und mehreren Handgriffen **34.** Die Bedienung des Rotationslasers 11 erfolgt über eine Bedienungseinrichtung **35,** die in das Grundgehäuse 32 integriert ist und von außen bedienbar ist. Neben der in das Grundgehäuse 32 integrierten Bedienungseinrichtung 35 kann eine Fernbedienung **36** vorgesehen sein, die über eine Kommunikationsverbindung mit dem Rotationslaser 11 verbindbar ist. Die Messeinrichtung des Rotationslasers 11 erzeugt im Inneren des Grundgehäuses 32 einen Laserstrahl, der auf eine um die Rotationsachse 21 rotierende Umlenkoptik **37** trifft. Ein erster Teil des Laserstrahls wird von der Umlenkoptik 37 um 90° umgelenkt und bildet den ersten Laserstrahl 22 des Rotationslasers 11, der eine Laserebene **38** aufspannt. Ein zweiter Teil des Laserstrahls tritt durch die Umlenkoptik 37 hindurch und bildet den zweiten Laserstrahl 23 des Rotationslasers 11. Abhängig von der Rotationsgeschwindigkeit, mit der der erste Laserstrahl 22 um die Rotationsachse 21 rotiert wird, werden ein Rotationsmodus, ein Linienmodus und ein Punktmodus des Rotationslasers 11 unterschieden.

FIGN. 2B, C zeigen die wesentlichen Komponenten des Rotationslasers 11 in einer schematischen Darstellung. Der Rotationslaser 11 umfasst eine Lasereinrichtung mit einer Strahlquelle **39,** die einen Laserstrahl erzeugt, und einer Kollimationsoptik **40.** Die Strahlquelle 39 ist beispielsweise als Halbleiterlaser ausgebildet, der den Laserstrahl im sichtbaren Wellenlängenspektrum erzeugt, beispielsweise einen roten Laserstrahl mit einer Wellenlänge von 635 nm oder einen grünen Laserstrahl mit einer Wellenlänge von 532 nm. Nach dem Austritt des Laserstrahls aus der Strahlquelle 39 wird der Laserstrahl mit Hilfe der Kollimationsoptik 40 kollimiert. Alternativ kann die Kollimationsoptik in die Strahlquelle integriert sein oder bei einer Strahlquelle 39 mit einer hohen Strahlqualität und geringen Divergenz kann die Kollimationsoptik entfallen.

Der kollimierte Laserstrahl trifft auf die Umlenkoptik 37, die den ersten und zweiten Laserstrahl 22, 23 trennt. Die Umlenkoptik 37 ist mit einer Dreheinrichtung **41** verbunden, die die Umlenkoptik 37 um die Rotationsachse 21 bewegt. Die Dreheinrichtung 41 umfasst eine drehbare Welle **42,** eine Motoreinheit **43** und eine Übertragungseinrichtung **44,** die beispielsweise in Form eines Zahnriemens ausgebildet ist und die Bewegung der Motoreinheit 43 auf die Welle 42 überträgt. Die Umlenkoptik 37 ist mit der drehbaren Welle 42 gekoppelt und um die Rotationsachse 21 drehbar ausgebildet. Die Welle 42 ist in einem Drehlager **45** eines Statorteils **46** gelagert, das mit einer Kugelkalotte **47** verbunden ist. Die Kugelkalotte 47 ist in einer Kugelkalottenlagerung **48** in einem gehäusefesten Montagerahmen **49** um zwei zur Rotationsebene (Ebene senkrecht zur Rotationsachse 21) senkrechte Schwenkebenen neigbar gelagert. Der Rotationslaser 11 umfasst eine Messeinrichtung **50,** die den Drehwinkel der Welle 42 während der Rotation um die Rotationsachse 21 misst. Die Messeinrichtung 50 ist beispielsweise als Winkelencoder ausgebildet und besteht aus einer Maßscheibe, die mit der Welle 42 drehfest verbunden ist, einer Abtasteinrichtung, mit der die Maßscheibe abgetastet wird, und einem Auswerte- und Steuerelement.

Der Rotationslaser 11 ist als horizontal und vertikal einsetzbarer Rotationslaser ausgebildet, wobei sich ein horizontal und vertikal einsetzbarer Rotationslaser durch eine zusätzliche Geräteachse von einem horizontal einsetzbaren Rotationslaser unterscheidet. Der Rotationslaser 11 weist als Geräteachsen eine erste Horizontalachse **51** und eine zweite Horizontalachse **52** auf, die senkrecht zueinander verlaufen und eine Geräteebene aufspannen. Die erste und zweite Horizontalachse 51, 52 werden am Rotationskopf 33 des Rotationslasers 11 über Anzeigeelemente angezeigt. Der horizontal und vertikal einsetzbare Rotationslaser 11 weist neben der ersten und zweiten Horizontalachse 51, 52 eine weitere Geräteachse auf, die als Vertikalachse **53** bezeichnet wird und im Idealfall senkrecht zur Geräteebene der ersten und zweiten Horizontalachse 51, 52 ausgerichtet ist.

Der Rotationslaser 11 ist als selbstnivellierender Rotationslaser ausgebildet, der sich automatisch nivelliert, wenn das Gerätegehäuse 31 des Rotationslasers 11 innerhalb eines Selbstnivellierbereiches aufgestellt wird. Der Selbstnivellierbereich von Rotationslasern liegt typischerweise bei 5°. Der Rotationslaser 11 umfasst eine Nivelliereinrichtung, die die Geräteachsen des Rotationslasers 11 unabhängig von einer Ausrichtung des Gerätegehäuses 31 in einen definierten Zustand ausrichtet. Die Nivelliereinrichtung umfasst eine erste Nivelliereinheit **55,** die die erste Horizontalachse 51 in einen ersten definierten Zustand ausrichtet, eine zweite Nivelliereinheit **56,** die die zweite Horizontalachse 52 in einen zweiten definierten Zustand ausrichtet, und eine dritte Nivelliereinheit **57,** die die Vertikalachse 53 in einen dritten definierten Zustand ausrichtet.

Die erste Nivelliereinheit 55 umfasst einen ersten Neigungssensor **58** und ein erstes Verstellelement, die zweite Nivelliereinheit 56 umfasst einen zweiten Neigungssensor **59** und ein zweites Verstellelement und die dritte Nivelliereinheit 57 umfasst einen dritten Neigungssensor **60** und ein drittes Verstellelement. Die Verstellelemente der Nivelliereinheiten 55, 56, 57 sind in eine Neigungseinrichtung **61** integriert, die einen ersten Verstellmotor **62** und einen zweiten Verstellmotor **63** aufweist. Der erste Verstellmotor 62 neigt den Montagerahmen 49 um eine erste Schwenkachse, die mit der zweiten Horizontalachse 52 zusammenfällt, und der zweite Verstellmotor 63 neigt den Montagerahmen 49 um eine zweite Schwenkachse, die mit der ersten Horizontalachse 51 zusammenfällt. Der erste Verstellmotor 62 bildet das erste Verstellelement der ersten Nivelliereinheit 55 und der zweite Verstellmotor 63 bildet das zweite Verstellelement der zweiten Nivelliereinheit 56. Da die Vertikalachse 53 senkrecht zur Horizontalebene der ersten und zweiten Horizontalachse 51, 52 ausgerichtet ist, kann die Ausrichtung der Vertikalachse 53 mittels des ersten und zweiten Verstellmotors 62, 63 eingestellt werden. Der erste und zweite Verstellmotor 62, 63 bilden gemeinsam das dritte Verstellelement der dritten Nivelliereinheit 57.

Die horizontale Ausrichtung der Laserebene bzw. der Gerätebene stellt einen bevorzugten definierten Zustand dar, in den ein Rotationslaser 11 in Horizontallage ausgerichtet werden soll, wobei die horizontal ausgerichtete Geräteebene auch als Horizontalebene bezeichnet wird. Die vertikale Ausrichtung der Laserebene bzw. der Geräteebene stellt einen bevorzugten definierten Zustand dar, in den ein Rotationslaser 11 in Vertikallage ausgerichtet werden soll, wobei die vertikal ausgerichtete Geräteebene auch als Vertikalebene bezeichnet wird. Die Laserebene 38, die der rotierende erste Laserstrahl 22 erzeugt, kann mittels der Neigungseinrichtung 61 gegenüber der Horizontalebene oder der Vertikalebene des Rotationslasers 11 geneigt werden. Der Rotationslaser 11 kann die Laserebene des rotierenden ersten Laserstrahls 22 in einer Neigungsrichtung oder in zwei Neigungsrichtungen neigen. Die Neigung der Laserebene erfolgt im nivellierten Zustand des Rotationslasers 11. Der Rotationslaser 11 kann in Horizontallage oder in Vertikallage geneigt werden.

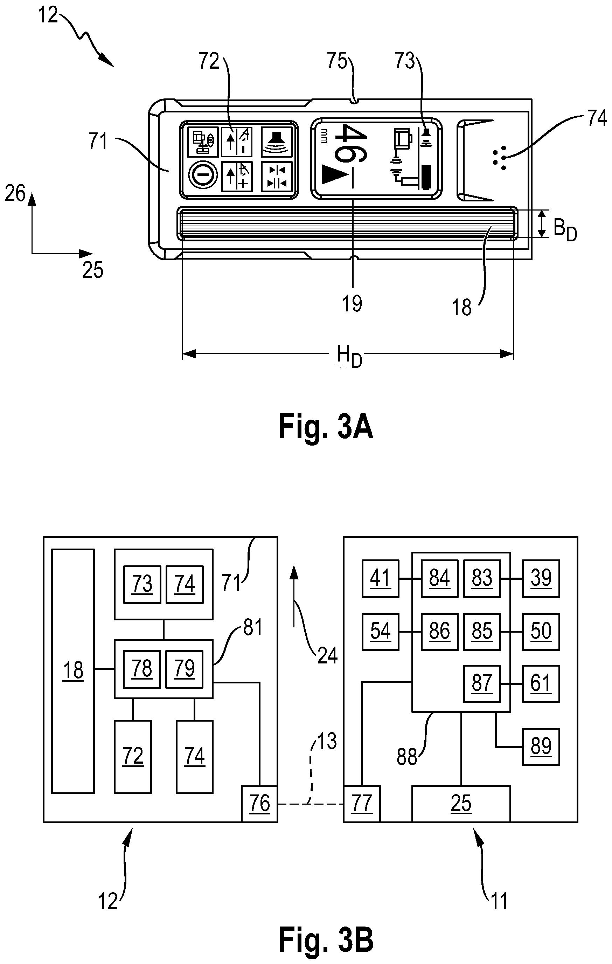

**FIGN. 3A****, B** zeigen den Laserempfänger 12 in Queranordnung in einer dreidimensionalen Darstellung (FIG. 3A) und die wesentlichen Komponenten des Laserempfängers 12 sowie das Zusammenwirken mit dem Rotationslaser 11 in einer schematischen Darstellung (FIG. 3B). Der Laserempfänger 12 ist mit einer Messfunktion ausgestattet, die den Abstand eines Laserstrahls zur Nullposition 19 des Detektionsfeldes 18 bestimmt.

Der Laserempfänger 12 umfasst ein Empfängergehäuse **71,** eine Bedienungseinrichtung **72,** ein optisches Display **73,** einen Lautsprecher **74** und das Detektionsfeld 18, mit dem die Auftreffposition eines Laserstrahls erfasst wird. Das Detektionsfeld 18 weist in der Längsrichtung 25 die Detektionshöhe H_{D} und in der Querrichtung 26 die Detektionsbreite B_{D} auf. Die Längsrichtung 25 entspricht der Messrichtung des Laserempfängers 12 und die Querrichtung 26 ist senkrecht zur Längsrichtung 25 ausgerichtet, wobei die Längs- und Querrichtung 25, 26 parallel zum Detektionsfeld 18 verlaufen.

Die Bedienungseinrichtung 72, das optische Display 73, der Lautsprecher 74 und das Detektionsfeld 18 sind in das Empfängergehäuse 71 des Laserempfängers 12 integriert. Über das optische Display 73 kann der Bediener Informationen über den Laserempfänger 12 ablesen.

Dazu gehören beispielsweise ein Ladezustand des Laserempfängers 12, Informationen über die drahtlose Kommunikationsverbindung 13 zu einem Rotationslaser 11 und die eingestellte Lautstärke des Lautsprechers 74. Außerdem kann der Abstand eines Laserstrahls zur Nullposition 19 des Laserempfängers 12 als numerischer Wert optisch angezeigt werden. Alternativ oder zusätzlich zur optischen Anzeige auf dem optischen Display 73 kann der Abstand des Laserstrahls über den Lautsprecher 74 mitgeteilt werden. Die Nullposition 19 des Detektionsfeldes 18 wird am Empfängergehäuse 71 über Markierungskerben **75** angezeigt.

FIG. 3B zeigt die wesentlichen Komponenten des Laserempfängers 12 und das Zusammenwirken des Laserempfängers 12 mit dem Rotationslaser 11 in Form eines Blockdiagramms. Die Kommunikation zwischen dem Laserempfänger 12 und dem Rotationslaser 11 erfolgt über die Kommunikationsverbindung 13, die eine erste Sende-/Empfangseinheit **76** im Laserempfänger 12 mit einer zweiten Sende-/Empfangseinheit **77** im Rotationslaser 11 verbindet. Die erste und zweite Sende-/Empfangseinheit 76, 77 sind beispielsweise als Funkmodule ausgebildet und die Kommunikation zwischen dem Laserempfänger 12 und dem Rotationslaser 11 erfolgt über eine als Funkverbindung ausgebildete Kommunikationsverbindung 13.

Das Detektionsfeld 18, das optische Display 73 und der Lautsprecher 74 sind mit einer Auswerteeinrichtung **78** verbunden, die im Inneren des Empfängergehäuses 71 angeordnet ist. Die Auswerteeinrichtung 78 ist mit einer Steuereinrichtung **79** zur Steuerung des Laserempfängers 12 verbunden, wobei die Auswerteeinrichtung 78 und die Steuereinrichtung 79 in eine beispielsweise als Mikrocontroller ausgebildete Kontrolleinrichtung **81** integriert sind. Der Laserempfänger 12 umfasst zusätzlich ein Sensormodul **82,** das im Inneren des Empfängergehäuses 71 angeordnet ist und das mit der Kontrolleinrichtung 81 verbunden ist. Mit Hilfe des Sensormoduls 82 kann eine Neigung des Laserempfängers 12 relativ zur Lotrichtung 24 gemessen werden. Das Sensormodul 82 umfasst einen 2-Achsen-Beschleunigungssensor oder zwei 1-Achs-Beschleunigungssensoren.

Zu den Komponenten des Rotationslasers 11, die über Steuerelemente gesteuert werden oder mit einem Auswertelement verbunden sind, gehören die Strahlquelle 39, die Dreheinrichtung 41, die Messeinrichtung 50 sowie die Nivelliereinrichtung 54 und, falls vorhanden, die Neigungseinrichtung 61. Ein erstes Steuerelement **83** zur Steuerung der Strahlquelle 39, ein zweites Steuerelement **84** zur Steuerung der Dreheinrichtung 41, ein Auswerte- und Steuerelement **85** für die Messeinrichtung 50, ein drittes Steuerelement **86** zur Steuerung der Nivelliereinrichtung 54 und ein viertes Steuerelement **87** zur Steuerung der Neigungseinrichtung 61 können als getrennte Komponenten ausgebildet sein oder, wie in FIG. 3B dargestellt, in eine gemeinsame Kontrolleinrichtung **88,** die beispielsweise als Mikrocontroller ausgebildet ist, integriert sein. Die Steuerelemente sind über Kommunikationsverbindungen mit den zu steuernden Komponenten des Rotationslasers 11 verbunden.

Die Rotationslaser 11 umfasst zusätzlich einen Temperatursensor **89,** der im Gerätegehäuse 31 des Rotationslasers 11 angeordnet ist. Der Temperatursensor 89 misst die Temperatur im Gerätegehäuse 31 und übermittelt die Temperatur an die Kontrolleinrichtung 89 des Rotationslasers 11. Da die Ausrichtung der Neigungssensoren 58, 59, die die erste und zweite Horizontalachse 51, 52 des Rotationslasers 11 in den horizontalen Zustand ausrichten, temperaturabhängig ist und der Rotationslaser 11 in einem großen Temperaturbereich, beispielsweise zwischen -20 °C und +50 °C eingesetzt werden kann, ist es vorteilhaft, wenn in der Kontrolleinrichtung 88 des Rotationslasers 11 mehrere Nulllagen u gespeichert sind. Dazu können für den ersten Neigungssensor 58 mehrere erste Nulllagen υ₁, für den zweiten Neigungssensor 59 mehrere zweite Nulllagen υ₂ und für den dritten Neigungssensor 60 mehrere dritte Nulllagen υ₃ in Abhängigkeit von der Temperatur aufgenommen und in einer Kennlinie oder Tabelle gespeichert werden. Die zur gemessenen Temperatur zugehörige Nulllage wird aus der Kennlinie bzw. Tabelle abgelesen und die Geräteachse wird in den durch die Nulllage definierten vertikalen Zustand ausgerichtet.

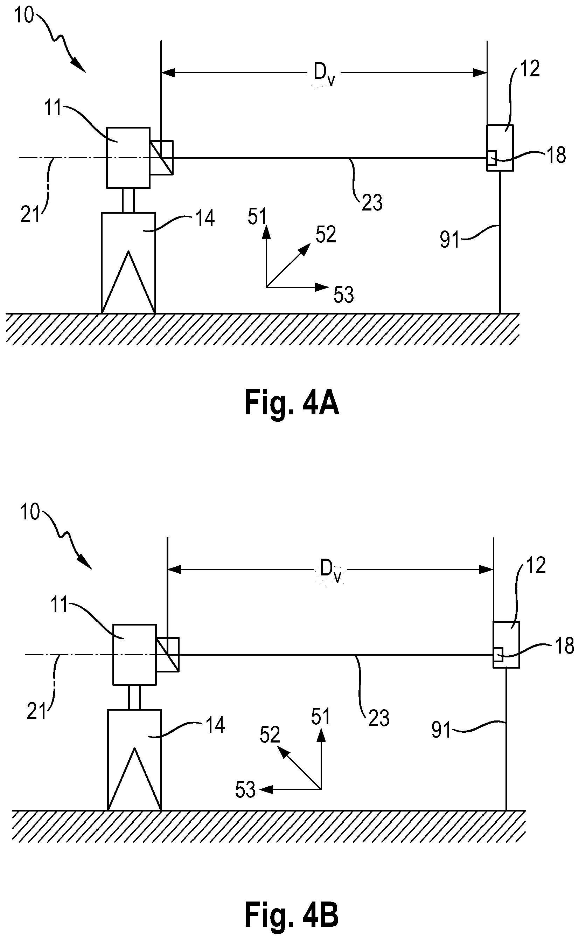

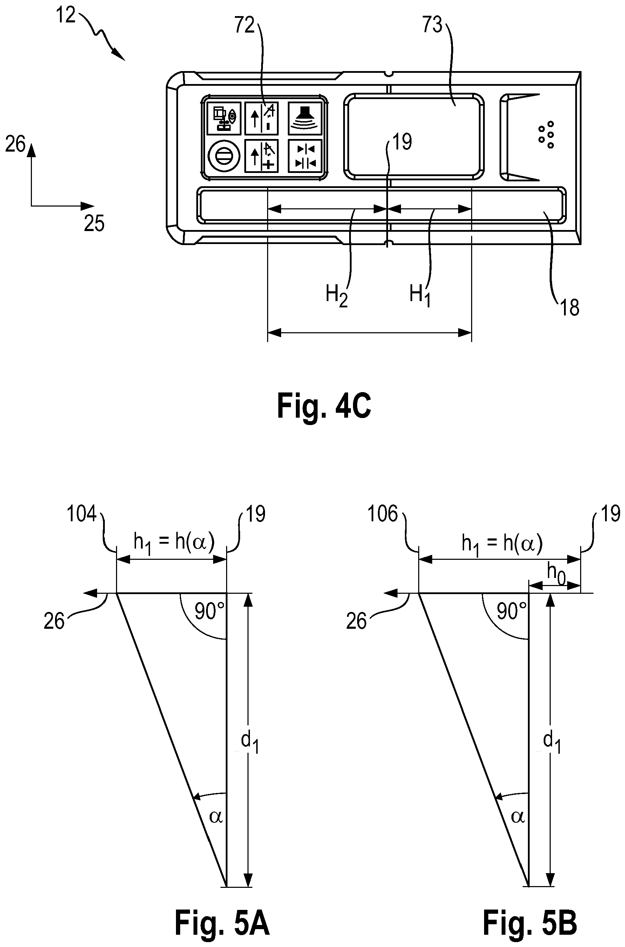

**FIGN. 4A-C** zeigen die Vorrichtung 10 der FIG. 1 mit dem Rotationslaser 11 und dem Laserempfänger 12 bei der Ausführung des erfindungsgemäßen Verfahrens zum Überprüfen und/oder Kalibrieren der Vertikalachse 53 des Rotationslasers 11. FIG. 4A zeigt den Rotationslaser 11 in einer ersten Winkelposition, in der die Vertikalachse 53 auf den Laserempfänger 12 ausgerichtet ist, FIG. 4B den Rotationslaser 11 in einer zweiten Winkelposition, die gegenüber der ersten Winkelposition um 180° um die Rotationsachse gedreht ist, und FIG. 4C den Laserempfänger 12 in Queranordnung mit den Auftreffpositionen des zweiten Laserstrahls 23 in der ersten und zweiten Winkelposition.

Das erfindungsgemäße Verfahren zum Überprüfen und/oder Kalibrieren einer Vertikalachse wird in Vertikallage des Rotationslasers 11 und in Queranordnung des Laserempfängers 12 ausgeführt. Der Rotationslaser 11 wird in Vertikallage auf dem Stativ 14 oder auf einem stabilen Untergrund in einer Messentfernung **Dᵥ** zum Laserempfänger 12 aufgestellt, wobei die Messentfernung D_{V} zwischen dem Zentrum der Umlenkoptik 37 des Rotationslasers 11 und der Oberseite des Detektionsfeldes 18 des Laserempfängers 12 gemessen wird; das Zentrum der Umlenkoptik 37 fällt mit der Rotationsachse 21 des Rotationslasers 11 zusammen. Die Verwendung des Stativs 14 hat den Vorteil, dass das erfindungsgemäße Verfahren in einer Höhe durchgeführt wird, in der Temperaturschwankungen geringer ausfallen als am Boden. Der Laserempfänger 12 wird an einer feststehenden Wand, einer mobilen Wand oder einer Messlatte **91** befestigt.

Um die Vertikallage des Rotationslasers 11 einzustellen, werden die erste Horizontalachse 51, die zweite Horizontalachse 52 und die Vertikalachse 53 in einen definierten vertikalen Zustand ausgerichtet, wobei der vertikale Zustand der ersten Horizontalachse 51 durch eine erste Nulllage υ₁ des ersten Neigungssensors 58, der vertikale Zustand der zweiten Horizontalachse 52 durch eine zweite Nulllage υ₂ des zweiten Neigungssensors 59 und der vertikale Zustand der Vertikalachse 53 durch eine dritte Nulllage υ₃ des dritten Neigungssensors 60 festgelegt ist. Die erste Horizontalachse 51 wird mittels der ersten Nivelliereinheit 55 in die erste Nulllage υ₁ ausgerichtet, die zweite Horizontalachse 52 wird mittels der zweiten Nivelliereinheit 56 in die zweite Nulllage υ₂ ausgerichtet und die Vertikalachse 53 wird mittels der dritten Nivelliereinheit 57 in die dritte Nulllage υ₃ ausgerichtet. In der Kontrolleinrichtung 89 des Rotationslasers 11 sind die erste Nulllage υ₁ für den ersten Neigungssensor 58, die zweite Nulllage υ₂ für den zweiten Neigungssensor 59 und die dritte Nulllage υ₂ für den dritten Neigungssensor 60 gespeichert.

Der Rotationslaser 11 wird zum Überprüfen der Vertikalachse 53 nacheinander in einer ersten und zweiten Winkelposition angeordnet, die sich um 180° voneinander unterscheiden. Der Rotationslaser 11 kann mit Hilfe der Drehplattform 16 oder manuell vom Bediener in die Winkelpositionen ausgerichtet werden. Der Rotationslaser 11 wird in der ersten Winkelposition angeordnet (FIG. 4A), wobei die Vertikalachse 53 in der ersten Winkelposition auf das Detektionsfeld 18 des Laserempfängers 12 ausgerichtet ist. Die Auftreffposition des zweiten Laserstrahls 23 auf dem Detektionsfeld 18 des Laserempfängers 12 wird von der Auswerteeinrichtung 78 des Laserempfängers 12 als erster Kontrollpunkt **92** bestimmt und der Abstand des ersten Kontrollpunktes 92 zur Nullposition 19 des Detektionsfeldes 18 wird als erster Höhenversatz **H₁** (FIG. 4C) gespeichert. Der Rotationslaser 11 wird aus der ersten Winkelposition um 180° um die Rotationsachse 21 in die zweite Winkelposition ausgerichtet (FIG. 4B). In der zweiten Winkelposition ist die Vertikalachse 53 in entgegen gerichteter Achsrichtung auf das Detektionsfeld 18 des Laserempfängers 12 ausgerichtet. Die Auftreffposition des zweiten Laserstrahls 23 auf dem Detektionsfeld 18 des Laserempfängers 12 wird von der Auswerteeinrichtung 78 des Laserempfängers 12 als zweiter Kontrollpunkt **93** bestimmt und der Abstand des zweiten Kontrollpunktes 93 zur Nullposition 19 des Detektionsfeldes 18 wird als zweiter Höhenversatz **H₂** (FIG. 4C) gespeichert.

Die Auswerteeinrichtung 78 des Laserempfängers 12 berechnet den Abstand zwischen dem ersten Kontrollpunkt 92 und zweiten Kontrollpunkt 93 als Differenz Δ aus dem ersten und zweiten Höhenversatz H₁, H₂. Die Auswertung kann wie beschrieben von der Auswerteeinrichtung 78 des Laserempfängers 12 durchgeführt werden. Alternativ kann die Auswertung von einer entsprechenden Komponente im Rotationslaser 11 oder einer weiteren Komponente durchgeführt werden. Wenn die Auswertung nicht von der Auswerteeinrichtung 78 des Laserempfängers 12 durchgeführt wird, werden der erste und zweite Kontrollpunkt 92, 93 oder die Differenz Δ über eine Kommunikationsverbindung an die entsprechende Komponente übermittelt.

Die Auswerteeinrichtung 78 des Laserempfängers 12 berechnet aus der Differenz Δ = H₁ - H₂ und der Messentfernung D_{V} zwischen dem Rotationslaser 11 und dem Laserempfänger 12 eine relative Abweichung **Δ/Dᵥ** und vergleicht die relative Abweichung Δ/D_{V} mit einer festgelegten relativen Maximalabweichung **Δₘₐₓ/Dᵥ.** Alternativ kann aus der relativen Maximalabweichung Δₘₐₓ/D_{V} und der Messentfernung D_{V} eine Maximalabweichung **Δₘₐₓ** berechnet und die Differenz Δ mit der Maximalabweichung Δₘₐₓ verglichen werden. Wenn die relative Abweichung Δ/D grösser als die relative Maximalabweichung bzw. die Differenz Δ grösser als die Maximalabweichung Δₘₐₓ ist, ist eine Kalibrierung der Vertikalachse 53 erforderlich. Die Auswerteeinrichtung 78 berechnet aus dem ersten Höhenversatz H₁, dem zweiten Höhenversatz H₂ und der Messentfernung D_{V} einen Korrekturwinkel θ, der als neue dritte Nulllage für die Ausrichtung der Vertikalachse 53 in den vertikalen Zustand gespeichert wird. Der Korrekturwinkel θ kann gemäß der Formel tan(θ) = (H₁ + H₂)/2D_{V} berechnet werden.

Die Messentfernung D_{V} zwischen dem Rotationslaser 11 und dem Laserempfänger 12 wird in einem ersten und/oder zweiten Messverfahren mittels des Rotationslasers 11 und des Laserempfängers 12 bestimmt. Dabei kann die Messentfernung D_{V} zwischen dem Rotationslaser 11 und dem Laserempfänger 12 zu unterschiedlichen Zeitpunkten bei der Durchführung des erfindungsgemäßen Verfahrens zum Überprüfen und/oder Kalibrieren der Vertikalachse 53 bestimmt werden. Die Messentfernung D_{V} kann als erste Distanz **d₁** mittels eines ersten Messverfahrens, als zweite Distanz **d₂** mittels eines zweiten Messverfahrens oder als gemittelte Distanz **d** aus der ersten und zweiten Distanz d₁, d₂ bestimmt werden. Dabei erfolgt die Bestimmung der ersten und zweiten Distanz d₁, d₂ in Vertikallage des Rotationslasers 11 und Queranordnung des Laserempfängers 12.

Beim zweiten Messverfahren wird der zweite Laserstrahl 23 mit einer konstanten Geschwindigkeit **v_{R}** des ersten oder zweiten Verstellmotors 62, 63 bewegt. Das zweite Messverfahren umfasst die Verfahrensschritte: Der Rotationslaser 11 wird in den definierten Zustand ausgerichtet und der zweite Laserstrahl 22 mit der konstanten Geschwindigkeit v_{R} bewegt. Die Auswerteeinrichtung 78 des Laserempfängers 12 bestimmt eine Signallänge **tₛ** des zweiten Laserstrahls 23 auf dem Detektionsfeld 18 des Laserempfängers 12. Die zweite Distanz d₂ kann aus der Geschwindigkeit v_{R} des zweiten Laserstrahls 23, der Signallänge tₛ des zweiten Laserstrahls 23 und der Detektionsbreite B_{D} des Detektionsfeldes 18 gemäß tₛ / t_{full} = B_{D} / (2πd₂) mit t_{full} = 60/v_{R} berechnet werden. Die Geschwindigkeit v_{R} wird in Umdrehungen pro Minute angegeben und die für eine Umdrehung erforderliche Zeit t_{full} beträgt 60/v_{R}.

**FIGN. 5A-C** zeigen drei Varianten des ersten Messverfahrens, mit dem die Messentfernung D_{V} zwischen dem Rotationslaser 11 und dem Laserempfänger 12 als erste Distanz d₁ bestimmt wird. Der Laserempfänger 12 ist parallel zur Lotrichtung 24 ausgerichtet und die erste Distanz d₁ wird zwischen der Rotationsachse 21 des Rotationslasers 11 und einer Vorderseite **101** des Detektionsfeldes 18 des Laserempfängers 12 gemessen. Zu Beginn des ersten Messverfahrens befinden sich die Horizontalachsen 51, 52 des Rotationslasers 11 im vertikalen Zustand oder werden in den vertikalen Zustand ausgerichtet. Der Rotationslaser 11 sendet einen vertikal ausgerichteten Laserstrahl **102** aus.

Der Laserstrahl 102 wird um einen bekannten Neigungswinkel α geneigt und die Auftreffposition des geneigten Laserstrahls auf dem Detektionsfeld 18 des Laserempfängers 12 wird als Messpunkt bestimmt und der Abstand des Messpunktes zur Nullposition als Höhe gespeichert. Dabei kann die Neigung des Laserstrahls mittels der Nivelliereinrichtung 54 oder der Neigungseinrichtung 61 durchgeführt werden. Die Verwendung der Nivelliereinrichtung 54 hat den Vorteil, dass die erste Distanz d₁ auch von Rotationslasern 11 ohne Neigungseinrichtung 61 bestimmt werden kann. Das erste Messverfahren setzt voraus, dass der Rotationslaser 11 so zum Laserempfänger 12 ausgerichtet ist, dass die Neigungsrichtung annähernd senkrecht zum Detektionsfeld 18 des Laserempfängers 12 verläuft. Abweichungen von der senkrechten Ausrichtung führen zu Messfehlern, die für kleine Abweichungen tolerierbar sind.

FIG. 5A zeigt die erste Variante des ersten Messverfahrens. Der vertikal ausgerichtete Laserstrahl 102 wird auf die Nullposition 19 des Laserempfängers 12 eingestellt. Der Laserstrahl wird anschließend mit Hilfe der entsprechenden Nivelliereinheit der Nivelliereinrichtung 54 oder der Neigungseinrichtung 61 um den Neigungswinkel α geneigt. Die Auftreffposition des geneigten Laserstrahls **103** auf dem Detektionsfeld 18 des Laserempfängers 12 wird als erster Messpunkt **104** bestimmt und der Abstand des ersten Messpunktes 104 zur Nullposition 19 wird als erste Höhe **h₁** = **h(α)** gespeichert. Die erste Distanz d₁ kann aus dem Neigungswinkel α und der Höhendifferenz zwischen der ersten Höhe (h₁ = h(α)) und der Nullposition 19 des Detektionsfeldes 18 berechnet werden. Wenn die Nullposition 19 einer Höhe von 0 mm entspricht, kann die erste Distanz d₁ gemäß tan(α) = h(α)/d₁ berechnet werden.

FIG. 5B zeigt die zweite Variante des ersten Messverfahrens. Der vertikal ausgerichtete Laserstrahl 102 wird auf das Detektionsfeld 18 des Laserempfängers 12 ausgesandt. Die Auftreffposition des Laserstrahls 102 auf dem Detektionsfeld 18 wird als Referenzpunkt **105** bestimmt und der Abstand des Referenzpunktes 105 zur Nullposition 19 als Referenzhöhe **h₀** = **h(0°)** gespeichert. Der Laserstrahl wird anschließend um den Neigungswinkel α geneigt und die Auftreffposition des geneigten Laserstrahls 103 auf dem Detektionsfeld 18 wird als erster Messpunkt **106** bestimmt und der Abstand des ersten Messpunktes 106 zur Nullposition 19 als erste Höhe **h₁ = h(α)** gespeichert. Die erste Distanz d₁ kann aus dem Neigungswinkel α und der Höhendifferenz zwischen der ersten Höhe h₁ = h(α) und der Referenzhöhe h₀ = h(0°) gemäß tan(α) = (h₁ - h₀)/d₁ berechnet werden.

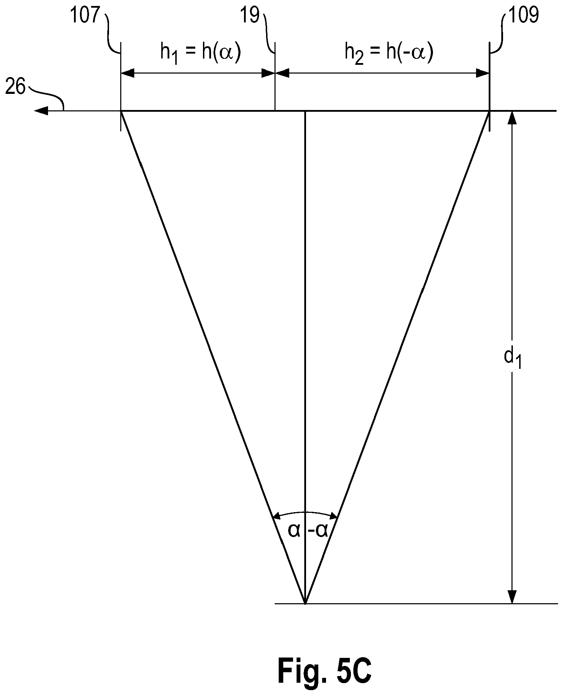

FIG. 5C zeigt die dritte Variante des ersten Messverfahrens. Der vertikal ausgerichtete Laserstrahl 102 wird in einer positiven Neigungsrichtung um den Neigungswinkel α geneigt. Die Auftreffposition des geneigten Laserstrahls 103 auf dem Detektionsfeld 18 wird als erster Messpunkt **107** bestimmt und der Abstand des ersten Messpunktes 107 zur Nullposition 19 als erste Höhe **h₁** = **h(+α)** gespeichert. Anschließend wird der Laserstrahl in einer zur positiven Neigungsrichtung entgegen gerichteten negativen Neigungsrichtung um einen negativen Neigungswinkel **-α** geneigt. Die Auftreffposition des geneigten Laserstrahls **108** auf dem Detektionsfeld 18 wird als zweiter Messpunkt **109** bestimmt und der Abstand des zweiten Messpunktes 109 zur Nullposition 19 als zweite Höhe **h₂** = **h(-α)** gespeichert. Die erste Distanz d₁ kann aus dem Neigungswinkel α und der Höhendifferenz zwischen der ersten Höhe h₁ = h(+α) und der zweiten Höhe h₂ = h(-α) gemäß tan(2α) = (h(+α) - h(-α))/d₁ berechnet werden.

Die Formeln zur Berechnung der Messentfernung D_{V} zwischen dem Rotationslaser 11 und dem Laserempfänger 12 und die Formeln zur Berechnung des Korrekturwinkels θ beim Kalibrieren der Vertikalachse 53 gelten für einen Laserempfänger 12, der parallel zur Lotrichtung 24 ausgerichtet ist. Um Messfehler durch eine nicht-lotrechte Ausrichtung des Laserempfängers 12 zu korrigieren, umfasst der Laserempfänger 12 das Sensormodul 82, mit dem die Neigung des Laserempfängers 12 relativ zur Lotrichtung 24 gemessen wird.

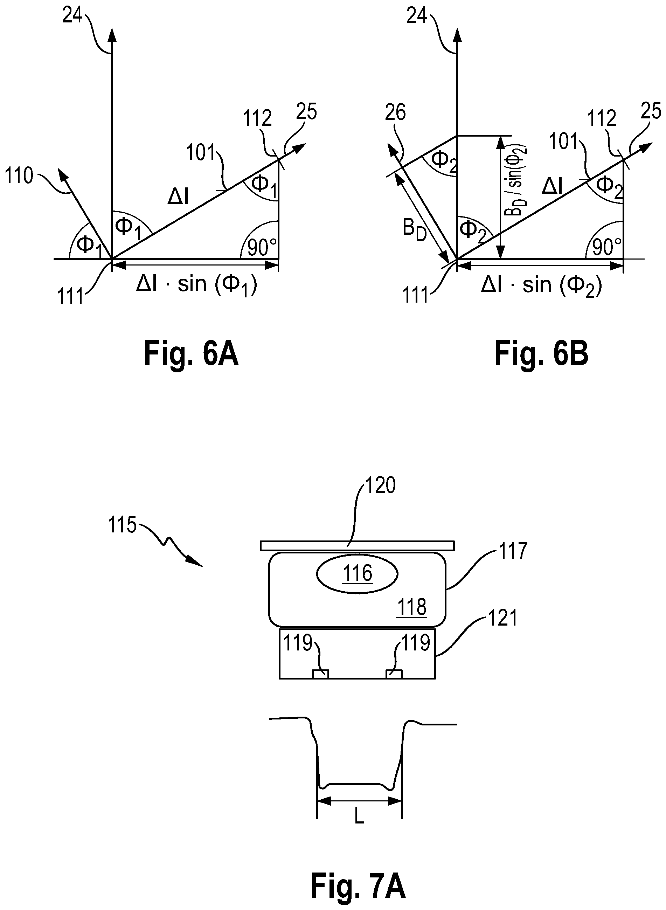

**FIGN. 6A****, B** zeigen die Ausrichtung des Laserempfängers 12 in einer schematischen Darstellung, wobei der Laserempfänger 12 zur Lotrichtung 24 um einen ersten Vertikalwinkel **φ₁** und/oder einen zweiten Vertikalwinkel **φ₂** geneigt sein kann. Dabei zeigt FIG. 6A den Laserempfänger 12, der in einer ersten Vertikalebene um den ersten Vertikalwinkel φ₁ geneigt ist, und FIG. 6B den Laserempfänger 12, der in einer zweiten Vertikalebene um den zweiten Vertikalwinkel φ₂ geneigt ist. Die erste Vertikalebene wird von der Lotrichtung 24 und einem Normalenvektor **110** des Detektionsfeldes 18 aufgespannt und die zweite Vertikalebene wird von der Längsrichtung 25 und der Querrichtung 26 des Detektionsfeldes 18 aufgespannt. Der erste Vertikalwinkel φ₁ wird zwischen dem Normalenvektor 110 und der Lotrichtung 24 gemessen, wobei der erste Vertikalwinkel φ₁ die Abweichung von 90° darstellt, und der zweite Vertikalwinkel φ₂ wird zwischen der Lotrichtung 24 und der Längsrichtung 25 des Detektionsfeldes 18 gemessen.

Ein erster Laserstrahl trifft auf das Detektionsfeld 18 des Laserempfängers 12 und erzeugt eine erste Auftreffposition **111.** Ein zweiter Laserstrahl trifft auf das Detektionsfeld 18 des Laserempfängers 12 und erzeugt eine zweite Auftreffposition **112.** Die Auswerteeinrichtung 78 des Laserempfängers 12 berechnet einen Abstand **Δl** zwischen der ersten Auftreffposition 111 und der zweiten Auftreffposition 112. Beim Verfahren zum Überprüfen und/oder Kalibrieren einer Vertikalachse entspricht der Abstand Δl der Differenz Δ aus dem ersten Höhenversatz H₁ und dem zweiten Höhenversatz H₂ und bei der Distanzmessung mittels des ersten Messverfahrens entspricht der Abstand Δl der Höhendifferenz Δh zwischen der ersten Höhe h₁ und der zweiten Höhe h₂.

Ist der Laserempfänger 12 um den ersten Vertikalwinkel φ₁ geneigt, ist der horizontale Abstand **v₁** senkrecht zur Lotrichtung 24 in der ersten Vertikalebene kleiner als der Abstand Δl, den das Detektionsfeld 18 des Laserempfängers 12 gemessen hat (FIG. 6A). Für den horizontalen Abstand v₁ gilt der Zusammenhang Δl · cos(90°-φ₁) = Δl · sin(φ₁). Ist der Laserempfänger 12 um den zweiten Vertikalwinkel φ₂ geneigt, ist der horizontale Abstand **v₂** senkrecht zur Lotrichtung 24 in der zweiten Vertikalebene kleiner als der Abstand Δl, den das Detektionsfeld 18 des Laserempfängers 12 gemessen hat (FIG. 6B). Für den horizontalen Abstand v₂ gilt der Zusammenhang Δl · cos(90°- φ₂) = Δl · sin(φ₂). Wenn der Laserempfänger 12 gegenüber der Lotrichtung 24 um den ersten Vertikalwinkel φ₁ und den zweiten Vertikalwinkel φ₂ geneigt ist, gilt für den horizontalen Abstand senkrecht zur Lotrichtung 24 der Zusammenhang Δl · cos(90°- φ₁) · cos(90° - φ₂) = Δl · sin(φ₁) · sin(φ₂). In den Formeln, die die Messfunktion des Laserempfängers 12 nutzen und Abstände Δl auf dem Detektionsfeld 18 messen, werden die Abstände Δl mit einem Korrekturfaktor cos(90°- φ₁) · cos(90° - φ₂) = sin(φ₁) · sin(φ₂) multipliziert. Der Korrekturfaktor cos(90°- φ₁) · cos(90°- φ₂) ist bei der Distanzmessung der ersten Distanz d₁ mittels des ersten Messverfahrens, bei der Bestimmung der Differenz Δ zwischen dem ersten und zweiten Kontrollpunkt 92, 93 und der Berechnung des Korrekturwinkels θ im Rahmen des erfindungsgemäßen Verfahrens zu berücksichtigen.

Der zweite Vertikalwinkel φ₂ sollte auch bei der Berechnung der zweiten Distanz d₂ mittels des zweiten Messverfahrens berücksichtigt werden. Durch die Neigung des Laserempfängers 12 um den zweiten Vertikalwinkel φ₂ ist der vertikale Abstand in Lotrichtung 24, den der zweite Laserstrahl 23 auf dem Detektionsfeld 18 überstreift, grösser als die Detektionsbreite B_{D} des Detektionsfeldes 18 in Querrichtung 26. Die Signallänge des zweiten Laserstrahls 23 entspricht dem vertikalen Abstand in Lotrichtung 24 auf dem Detektionsfeld 18. Für den vertikalen Abstand gilt der Zusammenhang B_{D}/cos(90° - φ₂) = B_{D}/ sin(φ₂). Eine Neigung des Laserempfängers 12 um den ersten Vertikalwinkel φ₁ verändert den vertikalen Abstand, den der zweite Laserstrahl 23 auf dem Detektionsfeld 18 überstreift, nicht.

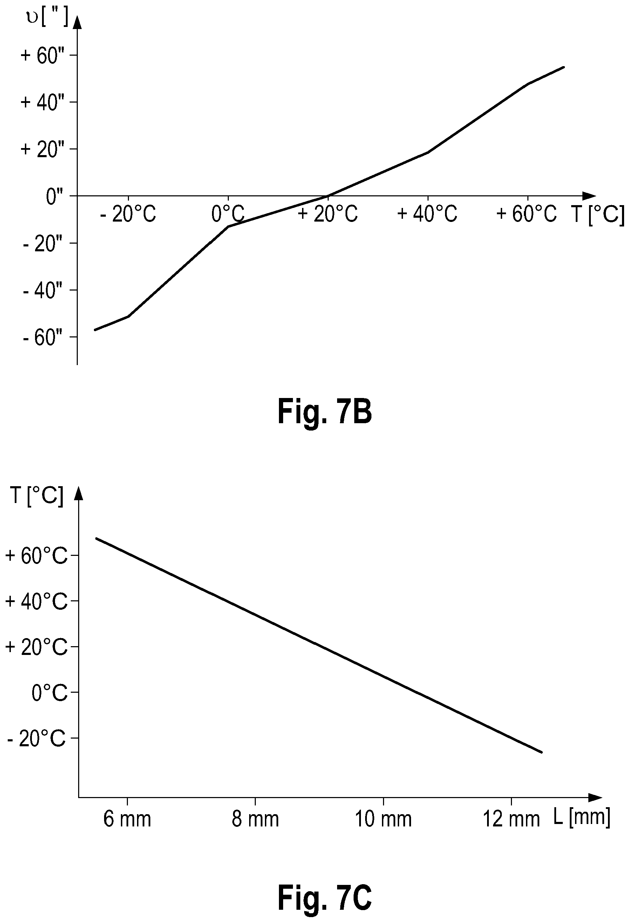

**FIGN. 7A-C** zeigen den Aufbau eines optischen Neigungssensors **115** mit einer Gasblase **116** (FIG. 7A), eine Kennlinie, die die Nulllage u des Neigungssensors 115 abhängig von einer Temperatur **T** darstellt (FIG. 7B), und eine weitere Kennlinie, die die Temperatur T abhängig von einer Blasenlänge **L** der Gasblase 116 darstellt (FIG. 7C).

Bei Außenanwendungen des Rotationslasers 11 kann es durch Sonneneinstrahlung zu Temperaturschwankungen im Gerätegehäuse 31 des Rotationslasers 11 kommen, so dass die gemessene Temperatur von der Position des Temperatursensors 89 im Gerätegehäuse 31 abhängig ist. Um Messfehler bei der Temperaturmessung zu reduzieren, können die Temperaturen der Neigungssensoren 58, 59, 60 gemessen werden. Die Temperatur des ersten Neigungssensors 58 wird als erste Temperatur **T₁**, die Temperatur des zweiten Neigungssensors 59 als zweite Temperatur **T₂** und die Temperatur des dritten Neigungssensors 59 als dritte Temperatur **T₃** bezeichnet. Die Temperaturmessung mittels der Neigungssensoren 58, 59, 60 hat den Vorteil, dass die Temperatur T₁, T₂, T₃ genau an dem Ort im Gerätegehäuse 31 des Rotationslasers 11 gemessen wird, der für die Ausrichtung der Geräteachsen 51, 52, 53 relevant ist.

FIG. 7A zeigt die Komponenten des Neigungssensors 115, der im Aufbau den Neigungssensoren 58, 59, 60 des Rotationslasers 11 entspricht. Der Neigungssensor 115 umfasst ein Gehäuse **117,** das mit der Gasblase 116 und einer Flüssigkeit **118** gefüllt ist, eine Lichtquelle **119,** einen Fotodetektor **120** und einen Abstandhalter **121.** Die Gasblase 116 weist eine Blasenlänge L auf, die temperaturabhängig ist und sich daher als Messgröße für die Temperatur T eignet. Die Blasenlänge L der Gasblase 116 kann mit Hilfe der Lichtquelle 119 und des Fotodetektors 120 gemessen werden. Zur Unterscheidung des ersten, zweiten und dritten Neigungssensors 58, 59, 60 werden die Komponenten mit einem Index versehen, der mit einem Bindestrich vom Bezugszeichen abgetrennt ist. Der erste Neigungssensor 58 weist den Index "1", der zweite Neigungssensor 59 den Index "2" und der dritte Neigungssensor 60 den Index "3" auf.

FIG. 7B zeigt eine Kennlinie, die die Nulllage u des Neigungssensors 115 abhängig von der Temperatur T darstellt. Die Kennlinie stellt für den zugelassenen Temperaturbereich des Rotationslasers 11 von - 20 °C bis + 50 °C einen Zusammenhang zwischen der Temperatur des Neigungssensors 115 und der Nulllage u des Neigungssensors 115, die der Ausrichtung in den definierten Zustand des Neigungssensors 115 entspricht, her. In der Kontrolleinrichtung 89 des Rotationslasers 11 sind eine erste Kennlinie, die die erste Nulllage υ₁ des ersten Neigungssensors 58 abhängig von der ersten Temperatur T₁ darstellt, eine zweite Kennlinie, die die zweite Nulllage υ₂ des zweiten Neigungssensors 59 abhängig von der zweiten Temperatur T₂ darstellt, und eine dritte Kennlinie, die die dritte Nulllage υ₃ des dritten Neigungssensors 60 abhängig von der dritten Temperatur T₃ darstellt, gespeichert.

FIG. 7C zeigt eine weitere Kennlinie, die die Temperatur T abhängig von der Blasenlänge L der Gasblase 116 darstellt. Die Kennlinie stellt für den zugelassenen Temperaturbereich des Rotationslasers 11 von - 20 °C bis + 50 °C einen Zusammenhang zwischen der Temperatur T des Neigungssensors 115 und der Blasenlänge L der Gasblase 116 her. Die Blasenlänge L der Gasblase 116 verändert sich linear mit der Temperatur T des Neigungssensors 115, wobei die Blasenlänge L mit sinkender Temperatur T abnimmt. In der Kontrolleinrichtung 89 des Rotationslasers 11 sind eine weitere erste Kennlinie, die die erste Temperatur T₁ abhängig von der ersten Blasenlänge L₁ der ersten Gasblase 116-1 darstellt, eine weitere zweite Kennlinie, die die zweite Temperatur T₂ abhängig von der zweiten Blasenlänge L₂ der zweiten Gasblase 116-2 darstellt, und eine weitere dritte Kennlinie, die die dritte Temperatur T₃ abhängig von der dritten Blasenlänge L₃ der dritten Gasblase 116-3 darstellt, gespeichert.

Alternativ kann die Kennlinie, die die Nulllage u des Neigungssensors 115 in Abhängigkeit von der Temperatur T darstellt, durch eine Kennlinie ersetzt werden, die die Nulllage u des Neigungssensors 115 in Abhängigkeit von der Blasenlänge L der Gasblase 116 darstellt. In diesem Fall sind in der Kontrolleinrichtung 89 des Rotationslasers 11 eine erste Kennlinie, die die erste Nulllage υ₁ des ersten Neigungssensors 58 in Abhängigkeit von der ersten Blasenlänge L₁ der ersten Gasblase 116-1 darstellt, eine zweite Kennlinie, die die zweite Nulllage υ₂ des zweiten Neigungssensors 59 in Abhängigkeit von der zweiten Blasenlänge L₂ der zweiten Gasblase 116-2 darstellt, und eine dritte Kennlinie, die die dritte Nulllage υ₃ des dritten Neigungssensors 60 in Abhängigkeit von der dritten Blasenlänge L₃ der dritten Gasblase 116-3 darstellt, gespeichert.

## Patentansprüche

1. Verfahren zum Überprüfen und/oder Kalibrieren einer Vertikalachse (53) eines Rotationslasers (11) mit Geräteachsen (51, 52, 53), die als erste Horizontalachse (51), als zweite Horizontalachse (52) und als Vertikalachse (53) ausgebildet sind, und mit einem Laserempfänger (12), wobei der Rotationslaser (11) einen um eine Rotationsachse (21) rotierbaren ersten Laserstrahl (22) und einen parallel zur Rotationsachse (21) verlaufenden ruhenden zweiten Laserstrahl (23) aussendet und der Laserempfänger (12) ein Detektionsfeld (18) mit einer Längsrichtung (25), die der Messrichtung des Laserempfängers (12) entspricht, und einer Querrichtung (26) aufweist, mit den Schritten:
▪ der Rotationslaser (11) wird in einer Messentfernung (D_{V}) zum Laserempfänger (12) positioniert, wobei der Rotationslaser (11) in Vertikallage, in der die Vertikalachse (53) senkrecht zur Lotrichtung (24) verläuft, und der Laserempfänger (12) in Queranordnung, in der die Querrichtung (26) parallel zur Lotrichtung (24) verläuft, ausgerichtet werden,
▪ die Geräteachsen (51, 52, 53) des Rotationslasers (11) werden in einen definierten Zustand ausgerichtet, wobei der definierte Zustand durch eine erste Nulllage (υ₁) für die erste Horizontalachse (51), eine zweite Nulllage (υ₂) für die zweite Horizontalachse (52) und eine dritte Nulllage (υ₃) für die Vertikalachse (53) festgelegt ist,
▪ der Rotationslaser (11) wird in einer ersten Winkelposition angeordnet, wobei die Vertikalachse (53) in der ersten Winkelposition auf das Detektionsfeld (18) des Laserempfängers (12) ausgerichtet wird,
▪ die Auftreffposition des zweiten Laserstrahls (23) auf dem Detektionsfeld (18) des Laserempfängers (12) wird als erster Kontrollpunkt (92) bestimmt und der Abstand des ersten Kontrollpunktes (92) zu einer Nullposition (19) des Detektionsfeldes (18) als erster Höhenversatz (H₁) gespeichert,
▪ der Rotationslaser (11) wird in einer zweiten Winkelposition angeordnet, wobei die zweite Winkelposition zur ersten Winkelposition um 180° um die Rotationsachse (21) des Rotationslasers (11) gedreht ist,
▪ die Auftreffposition des zweiten Laserstrahls (23) auf dem Detektionsfeld (18) des Laserempfängers (12) wird als zweiter Kontrollpunkt (93) bestimmt und der Abstand des zweiten Kontrollpunktes (93) zur Nullposition (19) des Detektionsfeldes (18) als zweiter Höhenversatz (H₂) gespeichert,
▪ der Abstand zwischen dem ersten Kontrollpunkt (92) und zweiten Kontrollpunkt (93) wird als Differenz (Δ = H₁ - H₂) aus dem ersten und zweiten Höhenversatz (H₁, H₂) berechnet,
▪ die Messentfernung (D_{V}) zwischen dem Rotationslaser (11) und dem Laserempfänger (12) wird bestimmt und
▪ die Differenz (Δ) wird mit einer Maximaldifferenz (Δₘₐₓ) verglichen.

2. Verfahren nach Anspruch 1, **dadurch gekennzeichnet, dass** die Messentfernung (D_{V}) zwischen dem Rotationslaser (11) und dem Laserempfänger (12) mittels des zweiten Laserstrahls (23) und des Laserempfängers (12) bestimmt wird.

3. Verfahren nach Anspruch 2, **dadurch gekennzeichnet, dass** die Messentfernung (D_{V}) zwischen dem Rotationslaser (11) und dem Laserempfänger (12) als erste Distanz (d₁) mittels eines ersten Messverfahrens, als zweite Distanz (d₂) mittels eines zweiten Messverfahrens oder als gemittelte Distanz (d) aus der ersten und zweiten Distanz (d₁, d₂) bestimmt wird.

4. Verfahren nach Anspruch 3, **dadurch gekennzeichnet, dass** der Rotationslaser (11) vertikal ausgerichtet wird, der vertikal ausgerichtete Laserstrahl (102) auf die Nullposition (19) des Detektionsfeldes (18) eingestellt wird, der Laserstrahl in Richtung des Laserempfängers (12) um einen Neigungswinkel (α) geneigt wird, die Auftreffposition des geneigten Laserstrahls (103) auf dem Detektionsfeld (18) des Laserempfängers (12) als erster Messpunkt (104) bestimmt wird, der Abstand des ersten Messpunktes (104) zur Nullposition (19) des Detektionsfeldes (18) als erste Höhe (h₁ = h(α)) gespeichert wird und die erste Distanz (d₁) aus dem Neigungswinkel (α) und einer Höhendifferenz (Δh) zwischen der ersten Höhe (h₁ = h(α)) und der Nullposition (19) des Detektionsfeldes (18) berechnet wird.

5. Verfahren nach Anspruch 3, **dadurch gekennzeichnet, dass** der Rotationslaser (11) vertikal ausgerichtet wird, die Auftreffposition des vertikal ausgerichteten Laserstrahls (102) auf dem Detektionsfeld (18) des Laserempfängers (12) als Referenzpunkt (105) bestimmt wird, der Abstand des Referenzpunktes (105) zur Nullposition (19) des Detektionsfeldes (18) als Referenzhöhe (h₀) gespeichert wird, der Laserstrahl um einen Neigungswinkel (α) geneigt wird, die Auftreffposition des geneigten Laserstrahls (103) auf dem Detektionsfeld (18) des Laserempfängers (12) als erster Messpunkt (106) bestimmt wird, der Abstand des ersten Messpunktes (106) zur Nullposition (19) des Detektionsfeldes (18) als erste Höhe (h₁ = h(α)) gespeichert wird und die erste Distanz (d₁) aus dem Neigungswinkel (α) und einer Höhendifferenz (Δh = h₁ - h₀) zwischen der ersten Höhe (h₁) und der Referenzhöhe (h₀) berechnet wird.

6. Verfahren nach Anspruch 3, **dadurch gekennzeichnet, dass** der Rotationslaser (11) vertikal ausgerichtet wird, der vertikal ausgerichtete Laserstrahl (102) in einer Neigungsrichtung um einen Neigungswinkel (α) geneigt wird, die Auftreffposition des geneigten Laserstrahls (103) auf dem Detektionsfeld (18) des Laserempfängers (12) als erster Messpunkt (107) bestimmt wird, der Abstand des ersten Messpunktes (107) zur Nullposition (19) des Detektionsfeldes (18) als erste Höhe (h₁ = h(α)) gespeichert wird, der Laserstrahl in einer entgegen gerichteten Neigungsrichtung um einen negativen Neigungswinkel (-a) geneigt wird, die Auftreffposition des geneigten Laserstrahls (108) auf dem Detektionsfeld (18) als zweiter Messpunkt (109) bestimmt wird, der Abstand des zweiten Messpunktes (109) zur Nullposition (19) des Detektionsfeldes (18) als zweite Höhe (h₂ = h(-α)) gespeichert wird und die erste Distanz (d₁) aus dem Neigungswinkel (α) und einer Höhendifferenz (Δh = h₁ - h₂) zwischen der ersten Höhe (h₁) und der zweiten Höhe (h₂) berechnet wird.

7. Verfahren nach Anspruch 3, **dadurch gekennzeichnet, dass** der Rotationslaser (11) in den definierten Zustand ausgerichtet wird, der zweite Laserstrahl mit einer Geschwindigkeit (v_{R}) bewegt wird, die Signallänge (t_{S}) des zweiten Laserstrahls auf dem Detektionsfeld (18) des Laserempfängers (12) bestimmt wird und die zweite Distanz (d₂) aus der Geschwindigkeit (v_{R}), der Signallänge (t_{S}) und der Detektionsbreite (B_{D}) des Detektionsfeldes (18) berechnet wird.

8. Verfahren nach einem der Ansprüche 1 bis 7, **dadurch gekennzeichnet, dass** eine Neigung des Laserempfängers (12) relativ zu einer Lotrichtung (24) als erster Vertikalwinkel (φ₁) in einer ersten Vertikalebene und/oder als zweiter Vertikalwinkel (φ₂) in einer zweiten Vertikalebene ermittelt wird, wobei die erste Vertikalebene von der Lotrichtung (24) und einem Normalenvektor (110) des Detektionsfeldes (18) und die zweite Vertikalebene von einer Längsrichtung (25) und einer Querrichtung (26) des Detektionsfeldes (18) aufgespannt wird.

9. Verfahren nach Anspruch 8, **dadurch gekennzeichnet, dass** für den ersten Vertikalwinkel (φ₁) und/oder den zweiten Vertikalwinkel (φ₂) bei der Auswertung mit dem Laserempfänger (12) ein winkelabhängiger Korrekturfaktor (cos(90°- φ₁), cos(90°- φ₂), 1/cos(90°- φ₂)) multipliziert wird.

10. Verfahren nach Anspruch 1, **dadurch gekennzeichnet, dass** für die Ausrichtung der Vertikalachse (53) in den definierten Zustand mehrere Nulllagen (υ₃) in Abhängigkeit von einer Temperatur (T) oder einer von der Temperatur (T) abhängigen Messgröße (L) aufgenommen und in einer Kennlinie gespeichert werden.

11. Verfahren nach Anspruch 10, **dadurch gekennzeichnet, dass** die Temperatur oder die von der Temperatur (T) abhängige Messgröße (L) des Rotationslasers (11) gemessen wird, die zur Temperatur (T) oder Messgröße (L) zugehörige Nulllage (υ₃) aus der Kennlinie ermittelt wird und die Vertikalachse (53) in den durch die Nulllage (υ₃) definierten Zustand ausgerichtet wird.

12. Verfahren nach Anspruch 11, **dadurch gekennzeichnet, dass** die Temperatur (T) mittels eines Neigungssensors (115), der ein Gehäuse (117), das mit einer Flüssigkeit (118) und einer Gasblase (116) gefüllt ist, mindestens eine Lichtquelle (119) und mindestens einen Fotodetektor (120) umfasst, gemessen wird.

13. Verfahren nach Anspruch 12, **dadurch gekennzeichnet, dass** eine weitere Kennlinie von Temperaturen (T) und Blasenlängen (L) der Gasblase (116) gespeichert wird, die Blasenlänge (L) der Gasblase (116) mittels der Lichtquelle (119) und des Fotodetektors (120) gemessen wird und die zur gemessenen Blasenlänge (L) zugehörige Temperatur (T) anhand der weiteren Kennlinie ermittelt wird.

14. Verfahren nach Anspruch 1, **dadurch gekennzeichnet, dass** aus der Messentfernung (D_{V}), dem ersten Höhenversatz (H₁) und dem zweiten Höhenversatz (H₂) ein Korrekturwinkel (θ) berechnet wird und der Korrekturwinkel (θ) als neue Nulllage für die überprüfte Vertikalachse (53) gespeichert wird, wenn die Differenz (Δ) grösser als die Maximaldifferenz (Δₘₐₓ) ist.

15. Verfahren nach Anspruch14, **dadurch gekennzeichnet, dass** die kalibrierte Vertikalachse (53) in einer weiteren Prüfschleife überprüft wird, wobei der vertikale Zustand der Vertikalachse (53) durch die neue Nulllage definiert ist.

## Claims

1. Method for checking and/or calibrating a vertical axis (53) of a rotating laser (11) with device axes (51, 52, 53), which are configured as a first horizontal axis (51), a second horizontal axis (52) and a vertical axis (53), and with a laser receiver (12), in which the rotating laser (11) emits a first laser beam (22) rotatable around an axis of rotation (21) and a stationary second laser beam (23) running parallel to the axis of rotation (21) and the laser receiver (12) comprises a detection field (18) with a longitudinal direction (25) which corresponds to the measurement direction of the laser receiver (12) and a transverse direction (26), with the steps:
▪ the rotating laser (11) is positioned at a measuring distance (Dᵥ) from the laser receiver (12), in which the rotating laser (11) is aligned in a vertical position, in which the vertical axis (53) runs perpendicular to the direction of gravity (24), and the laser receiver (12) is aligned in a transverse arrangement, in which the transverse direction (26) runs parallel to the direction of gravity (24),
▪ the device axes (51, 52, 53) of the rotating laser (11) are aligned in a defined state, in which the defined state is established by a first zero position (υ₁) for the first horizontal axis (51), a second zero position (υ₂) for the second horizontal axis (52) and a third zero position (υ₃) for the vertical axis (53),
▪ the rotating laser (11) is arranged in a first angular position, in which the vertical axis (53) is aligned with the detection field (18) of the laser receiver (12) in the first angular position,
▪ the incident position of the second laser beam (23) on the detection field (18) of the laser receiver (12) is determined as a first control point (92) and the distance of the first control point (92) from a zero point (19) of the detection field (18) is stored as a first height offset (H₁),
▪ the rotating laser (11) is arranged in a second angular position, in which the second angular position is turned 180° to the first angular position around the axis of rotation (21) of the rotating laser (11),
▪ the incident position of the second laser beam (23) on the detection field (18) of the laser receiver (12) is determined as a second control point (93) and the distance of the second control point (93) from the zero point (19) of the detection field (18) is stored as a second height offset (H₂),
▪ the distance between the first control point (92) and the second control point (93) is calculated as the difference (Δ = H₁ - H₂) between the first and second height offset (H₁, H₂),
▪ the measuring distance (Dᵥ) between the rotating laser (11) and the laser receiver (12) is determined and
▪ the difference (Δ) is compared with a maximum difference (Δₘₐₓ).

2. Method according to claim 1, **characterised in that** the measuring distance (Dᵥ) between the rotating laser (11) and the laser receiver (12) is determined by means of the second laser beam (23) and the laser receiver (12).

3. Method according to claim 2, **characterised in that** the measuring distance (Dᵥ) between the rotating laser (11) and the laser receiver (12) is determined as a first distance (d₁) by means of a first measuring method, as a second distance (d₂) by means of a second measuring method or as an average distance (d) from the first and second distance (d₁, d₂).

4. Method according to claim 3, **characterised in that** the rotating laser (11) is aligned vertically, the vertically aligned laser beam (102) is adjusted to the zero point (19) of the detection field (18), the laser beam is inclined in the direction of the laser receiver (12) by aninclination angle (α), the incident position of the inclined laser beam (103) on the detection field (18) of the laser receiver (12) is determined as a first measuring point (104), the distance of the first measuring point (104) from the zero point (19) of the detection field (18) is stored as a first height (h₁ = h(α)) and the first distance (d₁) is calculated from the inclination angle (α) and a height difference (Δh) between the first height (h₁ = h(α)) and the zero point (19) of the detection field (18).

5. Method according to claim 3, **characterised in that** the rotating laser (11) is aligned vertically, the incident position of the vertically aligned laser beam (102) on the detection field (18) of the laser receiver (12) is determined as a reference point (105), the distance of the reference point (105) from the zero point (19) of the detection field (18) is stored as a reference height (h₀), the laser beam is inclined by an inclination angle (α), the incident position of the inclined laser beam (103) on the detection field (18) of the laser receiver (12) is determined as a first measuring point (106), the distance of the first measuring point (106) from the zero point (19) of the detection field (18) is stored as a first height (h₁ = h(α)) and the first distance (d₁) is calculated from the inclination angle (α) and a height difference (Δh = h₁ - h₀) between the first height (h₁) and the reference height (h₀).

6. Method according to claim 3, **characterised in that** the rotating laser (11) is aligned vertically, the vertically aligned laser beam (102) is inclined in a direction of inclination by an inclination angle (α), the incident position of the inclined laser beam (103) on the detection field (18) of the laser receiver (12) is determined as a first measuring point (107), the distance of the first measuring point (107) from the zero point (19) of the detection field (18) is stored as a first height (h₁ = h(α)), the laser beam is inclined in an opposing direction of inclination by a negative inclination angle (-α), the incident position of the inclined laser beam (108) on the detection field (18) is determined as a second measuring point (109), the distance of the second measuring point (109) from the zero point (19) of the detection field (18) is stored as a second height (h₂ = h(-α)) and the first distance (d₁) is calculated from the inclination angle (α) and a height difference (Δh = h₁ - h₂) between the first height (h₁) and the second height (h₂).

7. Method according to claim 3, **characterised in that** the rotating laser (11) is aligned in the defined state, the second laser beam is moved with a speed of rotation (v_{R}), the signal length (tₛ) of the second laser beam on the detection field (18) of the laser receiver (12) is determined and the second distance (d₂) is calculated from the speed of rotation (v_{R}), the signal length (tₛ) and the detection width (B_{D}) of the detection field (18).

8. Method according to one of claims 1 to 7, **characterised in that** an inclination of the laser receiver (12) in relation to a direction of gravity (24) is established as a first vertical angle (Φ₁) in a first vertical plane and/or as a second vertical angle (Φ₂) in a second vertical plane, in which the first vertical plane is spanned by the direction of gravity (24) and a normal vector (110) of the detection field (18) and the second vertical plane is spanned by a longitudinal direction (25) and a transverse direction (26) of the detection field (18).

9. Method according to claim 8, **characterised in that** when evaluating with the laser receiver (12) an angle-dependent correction factor (cos(90° - Φ₁), cos(90° - Φ₂), 1/cos(90° - Φ₂)) is multiplied for the first vertical angle (Φ₁) and/or the second vertical angle (Φ₂).

10. Method according to claim 1, **characterised in that** several zero positions (υ₃) depending on a temperature (T) or a measured value (L) depending on the temperature (T) are recorded and stored in a characteristic curve for aligning the vertical axis (53) in the defined state.

11. Method according to claim 10, **characterised in that** the temperature or the measured value (L) depending on the temperature (T) of the rotating laser (11) is measured, the zero position (υ₃) associated with the temperature (T) or measured value (L) is established from the characteristic curve and the vertical axis (53) is aligned in the state defined by the zero position (υ₃).

12. Method according to claim11, **characterised in that** the temperature (T) is measured by means of an inclination sensor (115), which comprises a housing (117), which is filled with a liquid (118) and a gas bubble (116), at least one light source (119) and at least one photo detector (120).

13. Method according to claim 12, **characterised in that** a further characteristic curve of temperatures (T) and bubble lengths (L) of the gas bubble (116) is stored, the bubble length (L) of the gas bubble (116) is measured by means of the light source (119) and the photo detector (120) and the temperature (T) associated with the bubble length (L) measured is established using the further characteristic curve.

14. Method according to claim 1, **characterised in that** a correction angle (θ) is calculated from the measuring distance (Dᵥ), the first height offset (H₁) and the second height offset (H₂) and the correction angle (θ) is stored as a new zero position for the vertical axis (53) checked, if the difference (Δ) is greater than the maximum difference (Δₘₐₓ).

15. Method according to claim 14, **characterised in that** the vertical axis (53) calibrated is checked in a further check loop, in which the vertical state of the vertical axis (53) is defined by the new zero position.

## Revendications

1. Procédé pour contrôler et/ou calibrer un axe vertical (53) d'un laser rotatif (11) en utilisant des axes d'appareil (51, 52, 53) qui sont configurés comme un premier axe horizontal (51), un second axe horizontal (52) et un axe vertical (53), et un récepteur laser (12), dans lequel le laser rotatif (11) émet un premier faisceau laser (22) pouvant tourner autour d'un axe de rotation (21) et un second faisceau laser fixe (23) s'étendant parallèlement à l'axe de rotation (21), et le récepteur laser (12) comporte un champ de détection (18) ayant une direction longitudinale (25) qui correspond à la direction de mesure du récepteur laser (12), et une direction transversale (26), comportant les étapes consistant à :
• positionner le laser rotatif (11) à une distance de mesure (Dᵥ) par rapport au récepteur laser (12), le laser rotatif (11) étant orienté dans une position verticale dans laquelle l'axe vertical (53) s'étend perpendiculairement à la direction d'aplomb (24), et le récepteur laser (12) étant orienté dans un agencement transversal dans lequel la direction transversale (26) s'étend parallèlement à la direction d'aplomb (24),
• orienter les axes d'appareil (51, 52, 53) du laser rotatif (11) dans un état défini, l'état défini étant déterminé par une première position zéro (υ₁) pour le premier axe horizontal (51), une deuxième position zéro (υ₂) pour le second axe horizontal (52) et une troisième position zéro (υ₃) pour l'axe vertical (53),
• placer le laser rotatif (11) dans une première position angulaire, l'axe vertical (53) dans la première position angulaire étant orienté vers le champ de détection (18) du récepteur laser (12),
• déterminer la position d'incidence du second faisceau laser (23) sur le champ de détection (18) du récepteur laser (12) comme étant un premier point de contrôle (92), et mémoriser la distance du premier point de contrôle (92) jusqu'à une position zéro (19) du champ de détection (18) comme étant un premier décalage de hauteur (H₁),
• placer le laser rotatif (11) dans une seconde position angulaire, la seconde position angulaire étant tournée par rapport à la première position angulaire de 180° autour de l'axe de rotation (21) du laser rotatif (11),
• déterminer la position d'incidence du second faisceau laser (23) sur le champ de détection (18) du récepteur laser (12) comme étant un second point de contrôle (93), et mémoriser la distance du second point de contrôle (93) jusqu'à la position zéro (19) du champ de détection (18) comme étant un second décalage de hauteur (H₂),
• calculer la distance entre le premier point de contrôle (92) et le second point de contrôle (93) comme étant la différence (Δ = H₁ - H₂) entre les premier et second décalages de hauteur (H₁, H₂),
• déterminer la distance de mesure (Dᵥ) entre le laser rotatif (11) et le récepteur laser (12) et
• comparer la différence (Δ) à une différence maximale (Δₘₐₓ).

2. Procédé selon la revendication 1, **caractérisé en ce que** la distance de mesure (Dᵥ) entre le laser rotatif (11) et le récepteur laser (12) est déterminée au moyen du second faisceau laser (23) et du récepteur laser (12) .

3. Procédé selon la revendication 2, **caractérisé en ce que** la distance de mesure (Dᵥ) entre le laser rotatif (11) et le récepteur laser (12) est déterminée comme une première distance (d₁) au moyen d'un premier procédé de mesure, comme une seconde distance (d₂) au moyen d'un second procédé de mesure ou comme une distance (d) moyennée à partir des première et seconde distances (d₁, d₂).

4. Procédé selon la revendication 3, **caractérisé en ce que** le laser rotatif (11) est orienté verticalement, le faisceau laser (102) orienté verticalement est réglé sur la position zéro (19) du champ de détection (18), le faisceau laser en direction du récepteur laser (12) est incliné d'un angle d'inclinaison (α), la position d'incidence du faisceau laser incliné (103) sur le champ de détection (18) du récepteur laser (12) est déterminée comme étant un premier point de mesure (104), la distance du premier point de mesure (104) jusqu'à la position zéro (19) du champ de détection (18) est mémorisée en tant que première hauteur (h₁ = h(α)) et la première distance (d₁) est calculée à partir de l'angle d'inclinaison (α) et d'une différence de hauteur (Δh) entre la première hauteur (h₁ = h(α)) et la position zéro (19) du champ de détection (18).

5. Procédé selon la revendication 3, **caractérisé en ce que** le laser rotatif (11) est orienté verticalement, la position d'incidence du faisceau laser (102) orienté verticalement sur le champ de détection (18) du récepteur laser (12) est déterminée comme point de référence (105), la distance du point de référence (105) jusqu'à la position zéro (19) du champ de détection (18) est mémorisée en tant que hauteur de référence (h₀), le faisceau laser est incliné d'un angle d'inclinaison (α), la position d'incidence du faisceau laser incliné (103) sur le champ de détection (18) du récepteur laser (12) est déterminée comme étant un premier point de mesure (106), la distance du premier point de mesure (106) jusqu'à la position zéro (19) du champ de détection (18) est mémorisée en tant que première hauteur (h₁ = h(α)), et la première distance (d₁) est calculée à partir de l'angle d'inclinaison (α) et d'une différence de hauteur (Δh = h₁ - h₀) entre la première hauteur (h₁) et la hauteur de référence (h₀).

6. Procédé selon la revendication 3, **caractérisé en ce que** le laser rotatif (11) est orienté verticalement, le faisceau laser (102) orienté verticalement est incliné dans une direction d'inclinaison d'un angle d'inclinaison (α), la position d'incidence du faisceau laser incliné (103) sur le champ de détection (18) du récepteur laser (12) est déterminée comme étant un premier point de mesure (107), la distance du premier point de mesure (107) jusqu'à la position zéro (19) du champ de détection (18) est mémorisée en tant que première hauteur (h₁ = h(α)), le faisceau laser dans une direction d'inclinaison orientée à l'opposé est incliné d'un angle d'inclinaison négatif (-α), la position d'incidence du faisceau laser incliné (108) sur le champ de détection (18) est déterminée comme étant un second point de mesure (109), la distance du second point de mesure (109) jusqu'à la position zéro (19) du champ de détection (18) est mémorisée en tant que seconde hauteur (h₂ = h(-α)), et la première distance (d₁) est calculée à partir de l'angle d'inclinaison (α) et d'une différence de hauteur (Δh = h₁ - h₂) entre la première hauteur (h₁) et la seconde hauteur (h₂).

7. Procédé selon la revendication 3, **caractérisé en ce que** le laser rotatif (11) est orienté dans l'état défini, le second faisceau laser est déplacé à une vitesse (v_{R}), la longueur de signal (tₛ) du second faisceau laser sur le champ de détection (18) du récepteur laser (12) est déterminée et la seconde distance (d₂) est calculée à partir de la vitesse (v_{R}), de la longueur de signal (tₛ) et de la largeur de détection (B_{D}) du champ de détection (18).

8. Procédé selon l'une des revendications 1 à 7, **caractérisé en ce qu'**une inclinaison du récepteur laser (12) par rapport à une direction d'aplomb (24) est déterminée en tant que premier angle vertical (Φ₁) dans un premier plan vertical et/ou en tant que second angle vertical (Φ₂) dans un second plan vertical, dans lequel le premier plan vertical est défini par la direction d'aplomb (24) et un vecteur normal (110) du champ de détection (18) du récepteur laser (12) et le second plan vertical est défini par une direction longitudinale (25) et une direction transversale (26) du champ de détection (18) .

9. Procédé selon la revendication 8, **caractérisé en ce que**, lors de l'évaluation avec le récepteur laser (12), le premier angle vertical (Φ₁) et/ou le second angle vertical (Φ₂) est multiplié par un facteur de correction (cos (90°-Φ₁), cos (90°-Φ₂), 1/cos (90°-Φ₂)) dépendant de l'angle.

10. Procédé selon la revendication 1, **caractérisé en ce que** pour l'orientation de l'axe vertical (53) à l'état défini, plusieurs positions zéro (υ₃) sont enregistrées en fonction d'une température (T) ou d'une grandeur de mesure (L) dépendante de la température (T) et sont stockées dans une courbe caractéristique.

11. Procédé selon la revendication 10, **caractérisé en ce que** la température ou la grandeur de mesure (L) dépendante de la température (T) du laser rotatif (11) est mesurée, la position zéro (υ₃) associée à la température (T) ou à la grandeur de mesure (L) est déterminée à partir de la courbe caractéristique, et l'axe vertical (53) est orienté dans l'état défini par la position zéro (υ₃).

12. Procédé selon la revendication 11, **caractérisé en ce que** la température (T) est mesurée au moyen d'un capteur d'inclinaison (115) comprenant un boîtier (117) rempli d'un liquide (118) et d'une bulle de gaz (116), au moins une source de lumière (119) et au moins un photodétecteur (120).

13. Procédé selon la revendication 12, **caractérisé en ce qu'**une courbe caractéristique supplémentaire de températures (T) et de longueurs de bulle (L) de la bulle de gaz (116) est mémorisée, la longueur de bulle (L) de la bulle de gaz (116) est mesurée au moyen de la source de lumière (119) et du photodétecteur (120), et la température (T) associée à la longueur de bulle (L) à mesurer est déterminée au moyen de la courbe caractéristique supplémentaire.

14. Procédé selon la revendication 1, **caractérisé en ce qu'**un angle de correction (θ) est calculé à partir de la distance de mesure (Dᵥ), du premier décalage de hauteur (H₁) et du second décalage de hauteur (H₂), et l'angle de correction (θ) est mémorisé en tant que nouvelle position zéro pour l'axe vertical (53) contrôlé lorsque la différence (Δ) est supérieure à la différence maximale (Δₘₐₓ).

15. Procédé selon la revendication 14, **caractérisé en ce que** l'axe vertical (53) calibré est contrôlé dans une boucle de contrôle supplémentaire, dans lequel l'état vertical de l'axe vertical (53) est défini par la nouvelle position zéro.
